**Europäisches Patentamt**

(19) **European Patent Office**

**Office européen des brevets**

(11) Numéro de publication: **0 130 092**
**B1**

(12) # FASCICULE DE BREVET EUROPÉEN

(45) Date de publication du fascicule du brevet:
16.12.87

(51) Int. Cl.⁴: **D 06 B 5/16**

(21) Numéro de dépôt: **84400142.0**

(22) Date de dépôt: **23.01.84**

(54) Procédé et installation de chargement et/ou de déchargement automatiques de bobines.

(30) Priorité: **28.01.83 FR 8301347**
**09.03.83 FR 8303866**
**26.12.83 FR 8320759**
**26.12.83 FR 8320760**

(43) Date de publication de la demande:
**02.01.85 Bulletin 85/1**

(45) Mention de la délivrance du brevet:
**16.12.87 Bulletin 87/51**

(84) Etats contractants désignés:
**BE CH DE FR GB IT LI SE**

(56) Documents cité:
**DE-A-2 300 838**

(73) Titulaire: **BARRIQUAND, Société dite:, 9 à 13 Rue Saint Claude, F-42300 Roanne (FR)**

(72) Inventeur: **Barriquand, Bernard, 46, rue Pierre Dépierre, F-42300 Roanne (FR)**
Inventeur: **Fernandez, Antonio, 2, rue Brison, F-42300 Roanne (FR)**
Inventeur: **Villard, François, 3, rue Beaulieu Riorges, F-42300 Roanne (FR)**
Inventeur: **Machabert, Bernard, 40 C, rue Le Corbusier, F-42100 Saint Etienne (FR)**

(74) Mandataire: **Ores, Irène, CABINET ORES 6, Avenue de Messine, F-75008 Paris (FR)**

EP 0 130 092 B1

## Description

La présente invention est relative à une installation et à un procédé propres à permettre le chargement automatique de matières textiles sur des porte-matière prévus pour être introduits dans des appareils pour le traitement de matières textiles, et/ou le déchargement automatique de matières textiles, notamment en bobines, portées par les porte-matières de machines de traitement de matières textiles, après que ces dernères ont subi, dans ces machines, les traitements prévus.

Les machines pour le traitement de matières textiles, et notamment pour le traitement aqueux de ces matières, tel que lavage, thermofixation, blanchiment, teinture, apprêt, et pour leur essorage et leur séchage, comprennent des porte-matière qui ont pour r*ole de supporter la matière en cours de traitement dans la machine concernée.

Ces porte-matière comportent une pluralité de supports - connus sous le nom de baïonnettes ou clarinettes - fixés sur un porte-matière, sous la forme d'au moins une rangée circulaire ou de plusieurs rangées circulaires, concentriques ou non.

Pour la mise en place de la matière textile sur le porte-matière avant son introduction dans les appareils de traitement, de même que pour son déchargement du porte-matière, à la fin du ou des traitements auxquels elle est soumise on a longtemps procédé manuellement, ce qui représente des opérations longues et consommatrices de main-d'oeuvre.

Pour s'affranchir de cet inconvénient on a déjà proposé, par exemple dans DE-A-2 300 838, une installation dans laquelle la mise en place de la matière textile sur le porte-matière avant son introduction dans les appareils de traitement est réalisée mécaniquement. L'installation comprend une enceinte de stockage, un dispositif d'extraction de bobines hors de ladite enceinte, des moyens de transfert des bobines à un dispositif de préhension de celles-ci, un dispositif de calibrage et d'arrondissage des arêtes des bobines, un dispositif de mise en place d'un disque intercalaire, des moyens de préhension des bobines pour les réunir suivant des piles, des moyens pour déplacer les piles, des moyens d'accouplement d'un support de pile à une baïonnette ou une clarinette de porte-matière, un magasin de chapeaux de serrage de piles de bobines et un organe de préhension desdits chapeaux et de transfert de ceux-ci sur une baïonnette chargée des bobines pour verrouiller ladite pile. La confection des piles est faite à l'aide de supports de bobines actionnés par un mécanisme à chaîne sans fin, relativement complexe et encombrant et qui constitue chaque pile de bas en haut sur un support lui-même à structure relativement complexe puisque constituée de trois barres articulées.

Si une telle installation est appropriée pour le chargement en bobines d'un porte-matière, elle peut néanmoins être simplifiée, notamment en ce qui concerne les moyens de mise en pile des bobines. En outre, l'installation ne prévoit pas le déchargement automatique des porte-matière, comme maintenant requis dans les installations modernes de traitement de matières textiles.

C'est, par conséquent un but de l'invention de fournir une installation et un procédé de chargement automatique de matières textiles sur des porte-matière et/ou de déchargement automatique desdites matières textiles des porte-matière, qui permettent une accélération considérable des opérations de chargement et/ou de déchargement et une réduction très sensible de la main-d'oeuvre nécessaire à la réalisation de ces opérations.

Conformément à l'invention, ce but est atteint dans une installation propre à permettre le chargement automatique de matières textiles sur des porte-matière destinés à être introduits dans des appareils de traitement de matières textiles comprenant au moins une enceinte de stockage en vrac des matières textiles à charger, notamment sous forme de bobines, au moins un dispositif d'extraction des bobines ou analogues de matières textiles hors de ladite enceinte, des moyens de transfert des bobines, un dispositif de préhension des bobines pour les amener en bonne position au dispositif suivant, éventuellement un dispositif de calibrage et d'arrondissage des arêtes des bobines ou analogues, un dispositif de mise en place de disques intercalaires comprenant un magasin pour ces disques, des moyens de préhension des bobines préparées sur ce dispositif pour les réunir suivant des piles, des moyens pour déplacer lesdites piles et les amener en position dans le prolongement de l'extrémité supérieure d'une baïonnette ou d'une clarinette de porte-matière, des moyens d'accouplement de la partie inférieure d'un support de pile avec la partie supérieure de la baïonnette ou de la clarinette, un magasin de chapeaux de serrage de piles de bobines ou analogues transférées sur les baïonnettes associé à un organe de préhension desdits chapeaux et de transfert de ceux-ci successivement sur chacune des baïonnettes ou analogues chargée de bobines pour verrouiller la pile portée sur ladite baïonnette ou analogue, par le fait que les bobines sont mises en place sur le support ou broche par empilage les unes au-dessous des autres, le transfert de la broche à la baïonnette ou clarinette ayant lieu après positionnement vigoureux de l'extrémité supérieure de la baïonnette ou clarinette à la verticale précise de l'extrémité inférieure de la broche à l'aide d'un dispositif et en ce qu'elle comprend un appareil automatique de déchargement des matières textiles des porte-matière, après traitement, lequel appareil de déchargement se compose d'organes d'extraction, des bobines ou analogues animés d'un mouvement de translation alternatif et de moyens de récupération des bobines ou analogues extraites du porte-matière par lesdits moyens d'extraction, des moiens de commande

de la cadence de chargement et de l'appareil automatique de déchargement susdit étant en outre prévus.

D'autres caractéristiques de l'installation selon l'invention sont indiquées dans les sous-revendications.

L'invention a également pour objet un procédé de chargement et de déchargement automatiques de matières textiles, notamment en bobines, sur un porte-matière dans lequel on extrait les bobines ou analogues à charger sur un porte-matière d'une enceinte de stockage, on transfère les bobines extraites jusqu'à un poste de pose d'intercalaires après passage éventuel à un poste d'arrondissage des arêtes et de calibrage de leur diamètre, on forme des piles de bobines sur un support, on transfère une à une les piles formées sur une baïonnette, clarinette, virole ou analogue d'un porte-matière et on verrouille la pile transférée sur la baïonnette ou analogue au moyen d'un chapeau de serrage ou analogue, le procédé étant caractérisé en ce que chaque pile est formée sur une broche par empilage des bobines les unes au-dessous des autres, lors de mouvements alternatifs de la broche et en ce que le déchargement rapide et automatique des bobines ou analogues portées par le porte-matière extrait d'une machine de traitement de matières textiles ou analogue est effectué par dégagement de l'ensemble des bobines d'une pile des bobines empilées sur une baïonnette ou analogue du porte-matière.

D'autres caractéristiques de ce procédé sont définies dans les sous-revendications.

Outre les dispositions qui précèdent, l'invention comprend encore d'autres dispositions, qui ressortiront de la description qui va suivre.

La présente invention vise plus particulièrement les installations de chargement et de déchargement automatiques de matières textiles portées par des porte-matière du type de ceux utilisés dans des appareils de traitement de matières textiles, conformes aux dispositions qui précèdent ainsi que les lignes de traitement de matières textiles équipées de telles installations comprenant des appareils de chargement et de déchargement automatiques des porte-matière.

L'invention sera mieux comprise à l'aide du complément de description qui va suivre, qui se réfère aux dessins annexés dans lesquels,

- la figure 1 est une vue schématique en plan d'un appareil de chargement automatique conforme à l'invention;

- la figure 2 est une vue de face du déchargement d'une pile de bobines d'une broche sur une baïonnette d'un porte-matière mis en position correcte sur un plateau rotatif;

- la figure 3 est une vue en plan de détail à plus grande échelle, du dispositif de positionnement des baïonnettes ou analogues et du dispositif de distribution et de mise en place des chapeaux de serrage, ainsi que du dispositif de pressage des bobines, de l'appareil selon les figures 1 et 2;

- la figure 4 est une vue de détail, en élévation du dispositif de positionnement des baïonnettes de l'appareil selon les figures 1 et 2;

- la figure 5 est une vue de detail a plus grande échelle du dispositif de positionnement rigoureux des baïonnettes ou clarinettes dans l'axe de la broche, de l'appareil selon les figures 1 et 2;

- la figure 6 est une vue latérale, à plus grande échelle, du dispositif d'arrondissage des arêtes des bobines, de l'appareil selon les figures 1 et 2;

- la figure 7 est une vue de face du dispositif de préhension relevable porté par la broche pour réaliser l'embrochage des bobines, de l'appareil selon les figures 1 et 2;

- les figures 8 à 10 sont des vues schématiques de la variante de réalisation de l'appareil de chargement conforme à l'invention, permettant la réalisation du chargement à l'horizontale, et, en particulier: la figure 8 est une vue schématique, en élévation, d'un tel dispositif de chargement, la figure 9 est une vue schématique de la broche en position prête au déchargement horizontal sur une baïonnette du porte-matière également disposée horizontalement, et la figure 10 est une vue schématique de la broche déchargée horizontalement et des moyens qui coopèrent audit déchargement;

- la figure 11 est une vue schématique en plan, de l'appareil de chargement conforme à la présente invention, équipé d'un dispositif de déchargement également conforme à la présente invention;

- la figure 12 est une vue de face du dispositif de déchargement de la figure 11, prêt à réaliser une opération de déchargement;

- la figure 13 est une vue de face dudit dispositif de déchargement pendant la réalisation d'une opération de déchargement;

- la figure 14 est une vue en élévation de l'ensemble comprenant le dispositif de déchargement selon les figures 11 a 13 et la bande de reception et de transfert des bobines déchargées vers une zone de stockage;

- la figure 15 est une vue schématique en élévation d'un mode de réalisation d'un appareil de déchargement conforme à l'invention, en place pour réaliser une opération de déchargement,

- la figure 16 est une vue schématique en élévation de l'appareil de la figure 15, à la fin de sa course d'extraction des bobines hors des baïonnettes ou analogues,

- la figure 17 est une vue schématique, de dessus, de la phase d'éjection des bobines de la plaque d'extraction sur les moyens de récupération, dans l'appareil selon la figure 15;

- la figure 18 est une vue schématique partielle en élévation, à plus grande échelle, montrant le fonctionnement des organes de poussée des bobines de la plaque d'extraction sur les moyens de récupération, dans l'appareil selon la figure 15;

- la figure 19 est une vue schématique en élévation d'un mode de réalisation de l'appareil de déchargement conforme à la présente invention en place pour réaliser une opération de

déchargement de bobines des baïonnettes d'un portematière, disposées horizontalement;

- la figure 20 est une vue schématique, de dessus, de l'appareil de déchargement de la figure 19,

- la figure 21 est une vue schématique de système d'extraction des bobines placées sur les baïonnettes ou clarinettes du ou des porte-matière, avant un déchargement dans un plan horizontal, et

- la figure 22 est une vue schématique de ce même système d'extraction (figure 21), après un déchargement.

Il doit être bien entendu, toutefois, que ces dessins et les parties descriptives correspondantes, sont donnés uniquement à titre d'illustration de l'objet de l'invention, dont ils ne constituent en aucune manière une limitation.

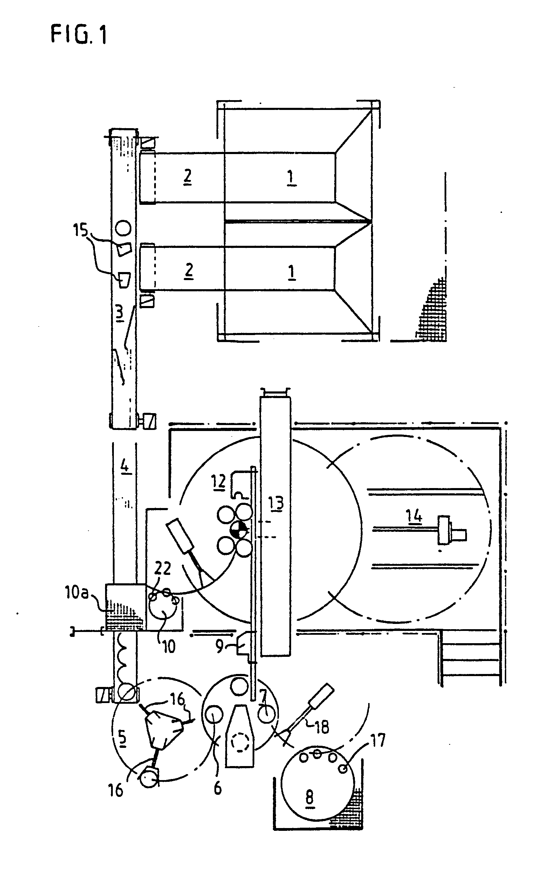

La figure 1 représente un appareil de chargement automatique de bobines sur un porte-matière, qui fait partie de l'installation de chargement et de déchargement automatiques de bobines portées par un porte-matière, conforme à la présente invention; ce mode de réalisation de l'appareil de chargement automatique comprend deux enceintes 1 de stockage des bobines en vrac, un dispositif d'extraction 2 associé à chacune des enceintes 1, un tapis roulant 3 de réception des bobines 15 extraites des enceintes 1, un convoyeur 4 de transfert des bobines 15 du tapis 3 jusqu'à un dispositif de préhension.

Le dispositif d'extraction 2 associé à chacune des enceintes 1 est disposé à la partie inférieure de son enceinte et permet d'alimenter régulièrement le tapis roulant 3 de réception des bobines. Un autre mode de réalisation avantageux consiste à placer le dispositif d'extraction à la partie supérieure de son enceinte. Dans ce cas l'ensemble des bobines de l'enceinte est soulevé au fur et à mesure de l'extraction des bobines. Ce mode d'extraction pourra être utilisé dans le cas de bobines fragiles qui risqueraient d'être endommagées par un écoulement en partie inférieure de l'enceinte.

Le dispositif 5 de préhension des bobines est pourvu d'un ou de plusieurs bras de préhension 16 qui ont pour r*ole de saisir une bobine 15 amenée par le convoyeur 4. Dans le mode de réalisation représenté à la figure 1, le dispositif 5 est associé à des moyens de vérification de la bonne position verticale des bobines, applicables au chargement de bobine de type conique, et comporte des moyens de rectification de la position desdites bobines s'il y a lieu. Les moyens de vérification (non visibles aux dessins) sont constitués par une cellule photo-électrique placée à l'extrémité de sortie du convoyeur 4. Selon que la bobine vérifiée est en bonne position ou en position non conforme, la cellule commande la rotation du bras de préhension 16 de la bobine dans le sens des aiguilles d'une montre ou dans le sens inverse; la bobine 15 saisie par sa périphérie ou axialement par le bras de préhension 16 est amenée par la rotation de ce dernier au poste suivant.

Selon une variante de réalisation (non représentée aux dessins), des moyens de détection et de rectification éventuelle de la position des bobines sont associés au convoyeur 4; les bobines 15 de type conique transportées par le tapis 3 sont poussées par un vérin perpendiculaire au sens du tapis 3, jusqu'à un chargeur placé au-dessus du convoyeur 4, qui les prend en charge l'une après l'autre. Ce chargeur est pourvu d'une cellule photo-électrique de détection du sens de la bobine ainsi que, suivant son axe, d'un vérin rotatif qui, en fonction de la commande de la cellule, bascule le chargeur vers la droite ou vers la gauche, pour poser la bobine en bonne position verticale sur le convoyeur 4 où elle est saisie, par sa périphérie ou intérieurement suivant son axe, par un bras de préhension 16 qui la transfère au poste suivant par translation ou par rotation.

Dans le cas de son application au chargement de bobines cylindriques, la machine peut ne pas comporter de moyens de détection et de rectification du sens des bobines.

Les bras de préhension 16 amènent la bobine à un dispositif 6 d'arrondissage des arêtes et de calibrage de son diamètre, auquel les disques intercalaires 17 provenant d'un magasin distributeur de ces disques 8, sont amenés au moyen d'un bras de prehension 18 anime d'un mouvement de rotation et sont posés sur la bobine portee par le dispositif 6 animé d'un mouvement de rotation, qui se trouve sur le parcours dudit bras 18.

La préhension des disques intercalaires peut être réalisée par un dispositif à pince qui, en position fermée, peut traverser l'intercalaire en son centre et en position ouverte le soulever par coincement.

Un autre dispositif avantageux pour la préhension des disques intercalaires peut être réalisé par un système à ventouses.

Un autre dispositif avantageux pour la préhension des disques intercalaires peut être réalisé par un système distributeur pièce par pièce, soit à la partie inférieure des piles de disques intercalaires, soit à la partie superieure.

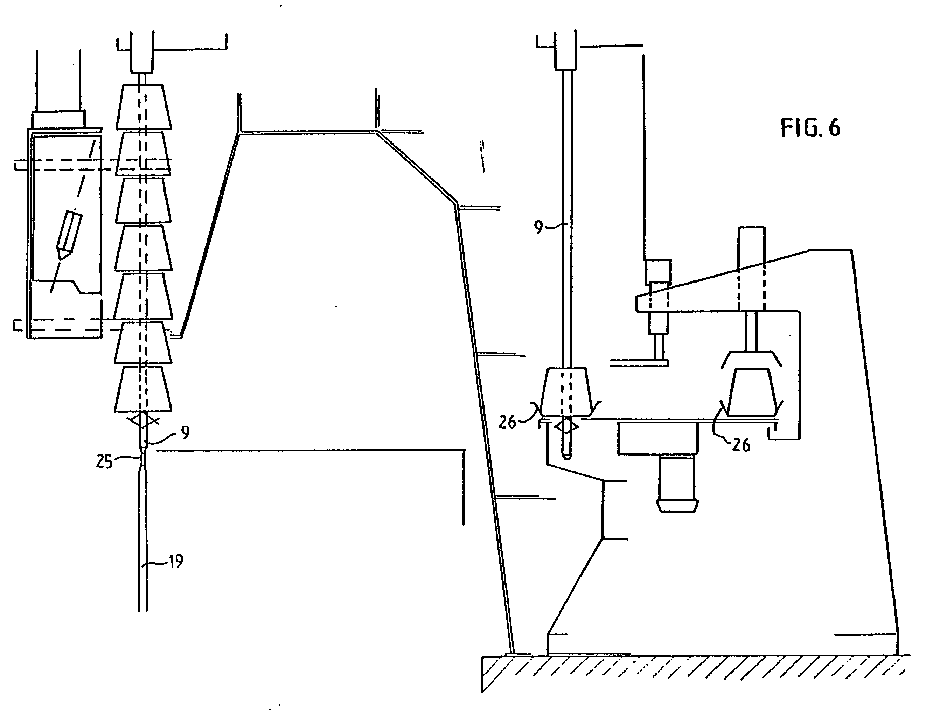

L'opération d'arrondissage des arêtes des bobines réalisée en pressant la bobine entre deux dispositifs 26 en forme d'assiettes (cf. figure 6) a pour but de supprimer les différences de densité de bobinage aux arêtes des bobines, différences qui peuvent se traduire par un défaut de teinture. Cette opération d'arrondissage est cependant facultative et le dispositif d'arrondissage peut même être supprimé dans le cas d'appareils de chargement de bobines ne nécessitant pas un tel arrondissage.

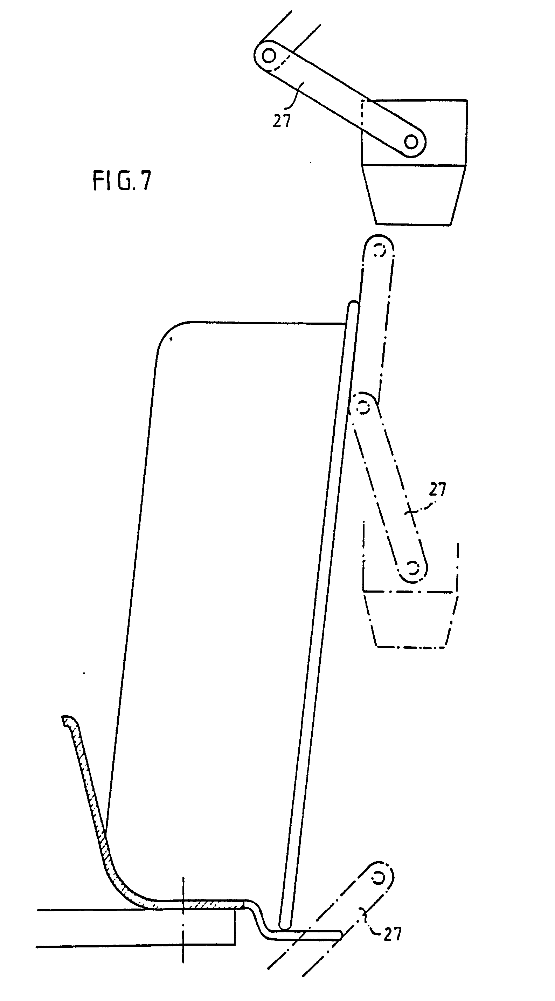

La bobine ainsi préparée, munie de son intercalaire, est entrainée en rotation sur le dispositif 6 et est positionnée sous la broche 9 qui est équipée à son extrémité inférieure d'un dispositif de préhension approprié, tel qu'un système de biellette 27 (cf. figure 7) qui, en position fermée, s'efface et permet à la broche 9 de traverser la bobine et l'intercalaire en leurs centres dans un mouvement de descente, et en position ouverte s'écarte et permet à la broche 9 de soulever la bobine et l'intercalaire dans le mouvement de remontée suivant le mouvement de descente.

Cette opération est répétée autant de fois qu'il est prévu de bobines par pile.

Chaque embrochage d'un ensemble bobine-disque intercalaire a pour effet de pousser les ensembles déjà embrochés en direction de l'extrémité supérieure de la broche.

Le même dispositif de préhension permet également, en s'effaçant, le déchargement des bobines empilées sur la broche, sur la baïonnette ou sur la clarinette.

Un autre mode de réalisation avantageux du dispositif de préhension est constitué par un système à billes ou à lamelles permettant également à l'extrémité de la broche 9 de traverser l'ensemble bobine et intercalaire en descente et de remonter le même ensemble en montée.

En descente, le système s'efface et en montée, il s'écarte.

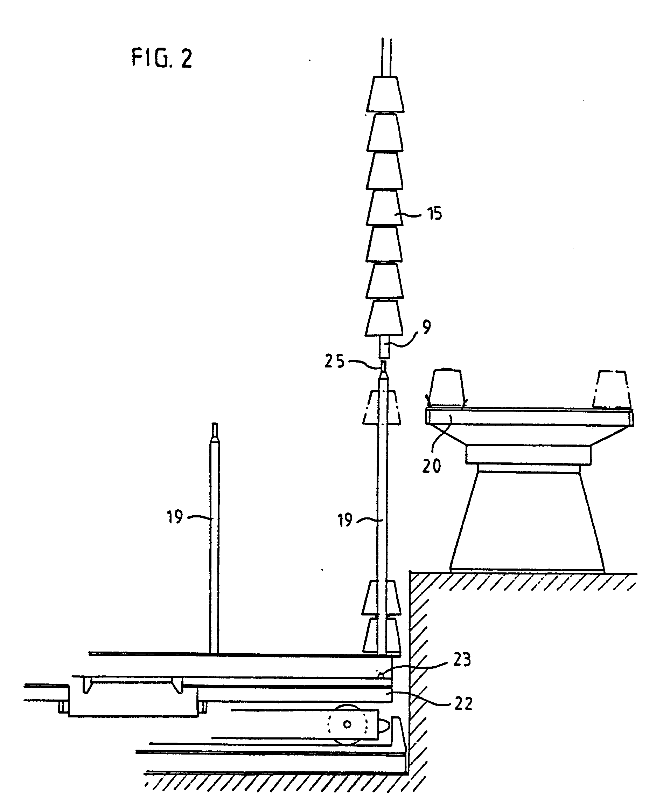

Lorsque la broche est chargée sur la totalité de sa hauteur du nombre de bobines requis, un détecteur de find'empilement placé en butée a son extrémité superieure ou un comptage provoque le déplacement vertical de la broche 9 jusqu'au-dessus d'une baïonnette ou d'une clarinette 19 d'un porte-matière, sur laquelle elle décharge la pile de bobines 15 et d'intercalaires 20 par gravité. Lorsque la totalité de la pile de bobines a été transférée sur une baïonnette 18 (cf. figure 2), des chapeaux de serrage 21 extraits d'un magasin 10a, entraînés en rotation sur un plateau rotatif 10 sont saisis sur ce dernier par un bras de préhension 11, muni d'une pince, de préférence actionné par un vérin, qui les amène et les pose sur le haut de la pile de bobines mise en place sur la baïonnette 18, où ils sont verrouilles au moyen d'un dispositif de verrouillage approprié tel que le dispositif de vissage 12, ou un dispositif d'encliquetage.

Un dispositif (non représenté) de pressage des bobines, tel qu'un vérin pneumatique par exemple, peut également être prévu en coopération avec la broche 9; ce dispositif, qui entre en action lorsque la broche est en position de déchargement au-dessus d'une baïonnette 1a, vient s'appliquer sur la dernière bobine embrochée à l'extrémité supérieure de la broche et exerce sur cette dernière une pression qui a pour effet de presser les bobines hors de la broche 9, pour les transférer en totalité sur la baïonnette 19 et ramener la hauteur totale des bobines empilées à la hauteur utile de la baïonnette ou de la clarinette (cas de bobines pressables).

La mise en place d'une baïonnette 19 sous le point fixe de déchargement de la broche 9 est réalisée au moyen du dispositif 14 de sélection de position du porte-matière, en plaçant le porte-matière sur un plateau rotatif 22 (cf. figure 2) pourvu d'un organe d'indexage 23 qui provoque la translation et la rotation du porte-matière pour mettre la baïonnette 19 à charger, dans l'axe de la broche 9.

Pour chaque type différent de porte-matière, les coordonnées, dans un plan horizontal et éventuellement dans un plan vertical, des positions de chaque baïonnette ou clarinette sont mémorisées dans le programme d'un automate dont il sera question plus loin.

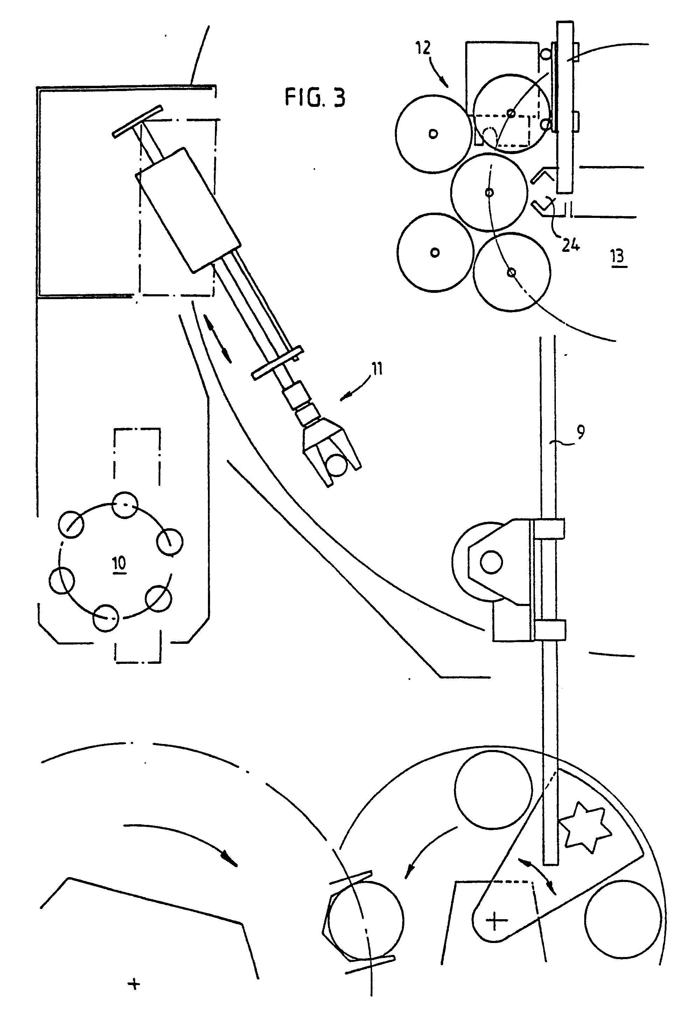

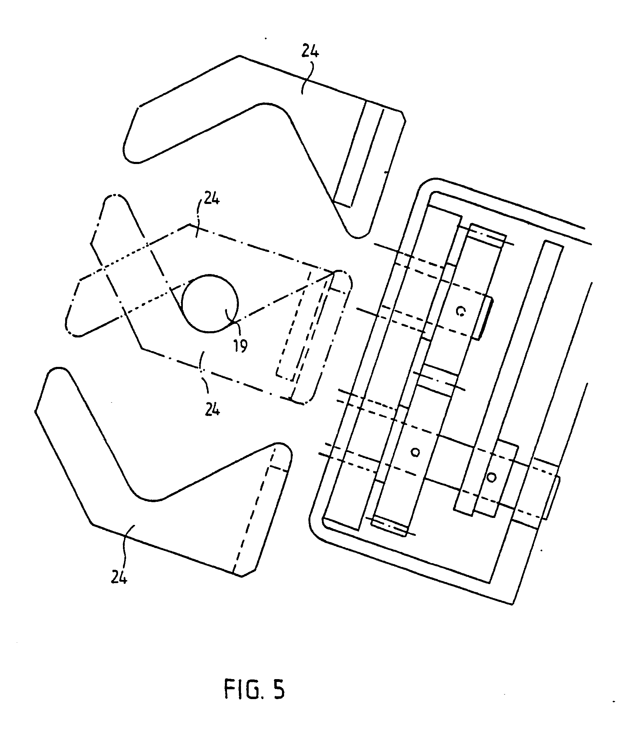

Cette mise en place de la baïonnette 18 est encore affinée pour positionner son extrémité supérieure rigoureusement dans l'axe précis de l'extrémité inférieure de la broche. Conformément à un mode de réalisation avantageux de l'invention, ce positionnement rigoureux est réalisé au moyen d'un organe mécanique constitué par une mâchoire 24 (cf. figures 3 et 5) qui se rapproche en position ouverte sur la partie supérieure de la baïonnette 19 selon une direction angulaire par rapport à la verticale. L'ouverture de la mâchoire 24 est telle qu'une fois le rapprochement des deux parties en regard qui constituent la mâchoire terminé, la partie supérieure de la baïonnette se trouve dans la zone circonscrite à l'intérieur de la mâchoire. La mâchoire se ferme alors sur ladite partie supérieure de la baïonnette et la positionne exactement sous l'extrémité inférieure de la broche. Une fois le positionnement exact effectué, la broche 9 effectue un mouvement vertical descendant pour venir s'encastrer, par un alésage central qui est ménagé dans sa zone d'extrémité inférieure, dans la pièce 25 portée par l'extrémité supérieure de la baïonnette 19; on réalise ainsi l'accouplement de la partie inférieure de la broche avec la partie supérieure de la baïonnette.

Une fois la baïonnette et la broche accouplées, la mâchoire de positionnement 24 s'ouvre et se dégage de sa position de mise en place de la baïonnette en se déplaçant à nouveau à la remontée selon la même direction angulaire que ci-dessus. Le dispositif de préhension 27, porté par l'extrémité inférieure de la broche s'efface alors pour permettre de déchargement par gravité de la pile portée par la broche 9 sur la baïonnette 19. La broche 9 une fois déchargée de sa pile sur la baïonnette 19, se retire de cette dernière par remontée et est ramenée à son emplacement de préhension des ensembles bobines-intercalaires.

A noter que le dispositif de pressage des bobines, outre le r*ole qui lui est assigné, peut également assurer le maintien d'une pile de bobines sur une baïonnette, l'extrémité supérieure de la baïonnette à l'intérieur de la pile de bobines étant maintenue en position fixe par le maintien des bobines assuré par le dispositif de pressage, permettant ainsi la mise en place précise du chapeau de serrage 21 sur l'extrémité supérieure de la baïonnette. Il est bien entendu que le r*ole de maintien que le dispositif de pressage peut être amené à jouer est nécessaire dans le cas où l'on préfére ne pas avoir recours à nouveau à la mâchoire 24 pour repositionner la baïonnette chargée, dans sa position précise, préalablement à la mise en place du chapeau de serrage 21.

Bien que l'on se soit référé dans ce qui précéde à un porte-matière du type à baïonnettes, l'on comprendra aisément que l'invention s'applique à tous porte-matière analogues et notamment aux porte-matière à clarinettes ou à viroles.

L'appareil de chargement automatique de matières textiles, notamment en bobines, sur un porte-matière conforme à l'invention, est commandé de manière à réaliser une synchronisation et une cadence appropriées des opérations de chargement qu'il réalise, la commande pouvant être une commande électrique ou pneumatique ou une commande électrique et pneumatique combinée, éventuellement associée à des moyens de synchronisation électroniques tels que circuits imprimés et à des moyens de programmation à horloge ou par ordinateur connus d'une façon générale sous le nom d'automates programmables.

La synchronisation peut être réalisée de telle manière qu'alors qu'un empilement est en cours de réalisation sur la broche, une autre pile déchargée sur une baïonnette soit verrouillée par un chapeau de serrage.

Cette synchronisation peut, par exemple, comprendre la séquence d'opérations suivante:

Sequence I
- Arrivée des bobines au poste 5 Il n'y a pas d'attente à ce poste qui est alimenté à une cadence supérieure à celle des séquences suivantes.

Sequence II
- Constitution d'une pile de bobines sur la broche 9.

Cadence continue pour les opérations suivantes:
- Préhension d'une bobine en 5.
- Présentation au poste 6.
- Arrondissage des arêtes.
- Mise en place d'un intercalaire.
- Présentation au poste d'embrochage.
- Préhension d'une bobine et d'un intercalaire par la broche 9, n fois.
n = nombre de bobines par pile.

Sequence III
- Déplacement de la broche 9 au-dessus de la baïonnette ou de la clarinette.
- Ajustement et alignement de la broche 9 avec la baïonnette ou la clarinette
- Déchargement des bobines de la broche 9 sur la baïonnette ou la clarinette
- Retrait de la broche 9.

Sequence IV
- Retour de la broche 8 au poste de chargement des bobines.

Sequence V
- Mise en place du chapeau au poste 13 avec nouvel alignement broche-baïonnette ou clarinette, pressage, vissage ou encliquetage. Positionnement du porte-matière pour chargement de la baïonnette ou clarinette suivante ou fin de chargement après la dernière pile.

La cadence de production de l'installation sera celle des séquences II et III. Les autres séquences auront lieu soit simultanément, soit entre deux séquences III, pour les séquences IV et V.

Une autre réalisation avantageuse de l'installation consiste en l'utilisation de deux broches 9 de manière à ramener la cadence de production de l'installation à celle des seules séquences III + V ou de la seule séquence II.

Une autre réalisation avantageuse de l'installation consiste à la pourvoir d'une pluralité de broches animées de mouvements de translation ou de rotation permettant leur transfert du poste de chargement au poste de déchargement des broches.

L'on obtient ainsi grâce aux dispositions de la présente invention, un chargement rapide des porte-matière, avec une main-d'oeuvre très réduite, qui est en outre exonérée des tâches pénibles que représentent les opérations de chargement manuel.

Selon une variante de réalisation, l'appareil de chargement conforme à l'invention, peut être conçu de manière à permettre le chargement horizontal des bobines sur les porte-matière.

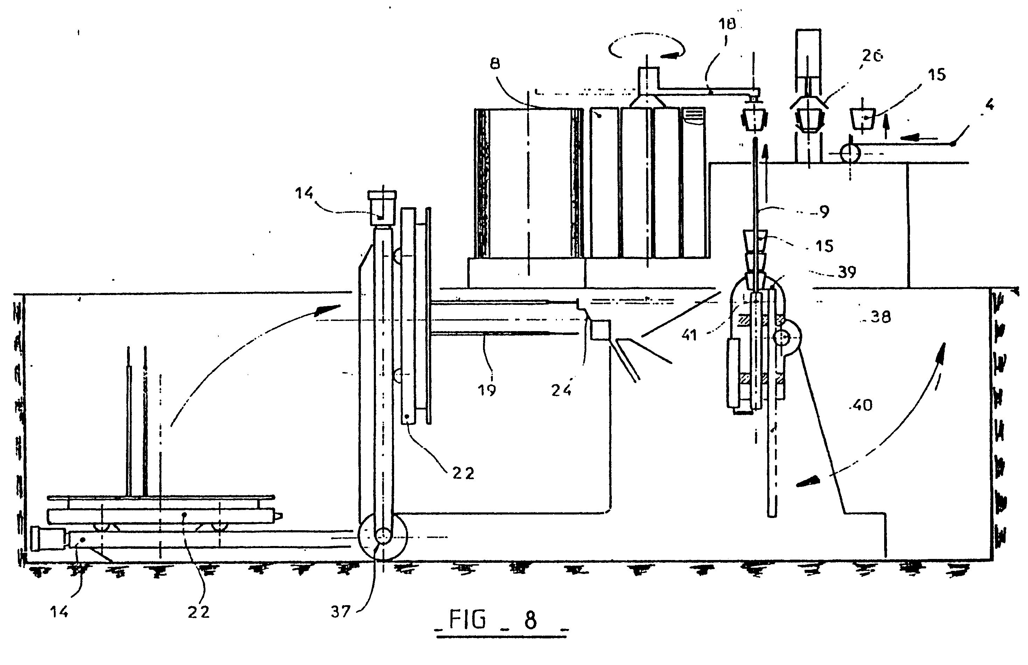

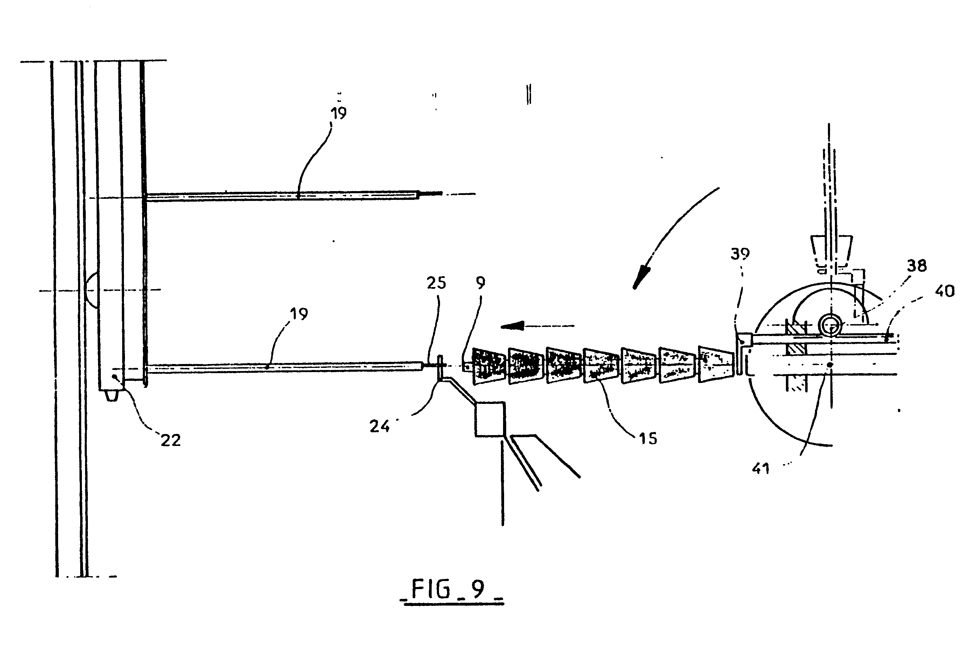

Dans ce but (cf. figures 8 à 10), la broche 9 qui est tout d'abord chargée de bobines 15 comme décrit plus haut, est associée à un dispositif d'entraînement en rotation 41 (moteur ou vérin rotatif, par exemple) qui, lorsque son chargement en bobines 15 est terminé, l'entraîne en rotation suivant un mouvement de déplacement sectoriel de l'ordre de 90° qui la fait passer de la position verticale dans laquelle elle a été chargée en bobines, comme décrit ci-dessus, à une position horizontale de chargement d'une baïonnette 19 d'un porte-matière qui est lui-même placé dans une position telle que son axe soit horizontal et que les baïonnettes qui le composent qui sont sensiblement parallèles à son axe, soient également en position horizontale.

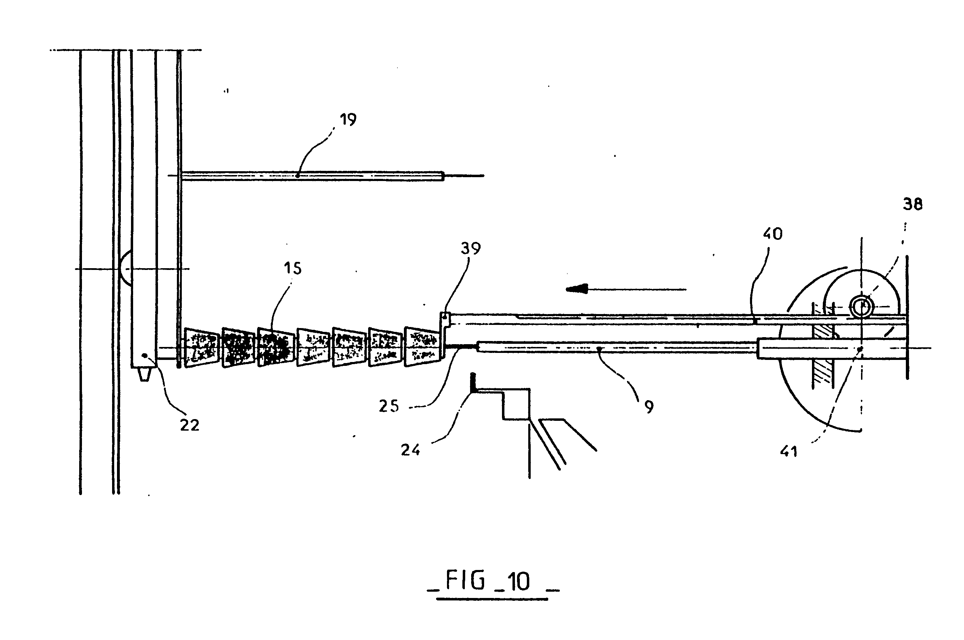

Dans cette position, la coopération du plateau rotatif 22 sur lequel est placé le porte-matière et du dispositif 14 de sélection de la position du porte-matière mettent la baïonnette 19 à charger, dans l'axe de la broche 9. Cette dernière est pourvue d'un système de translation 40 commandé par un dispositif de commande 38 approprié, qui réalise le positionnement exact de la broche 9 en regard de la baïonnette à charger pour permettre son accouplement, à l'aide de la mâchoire 24 et par l'intermédiaire de la pièce 25 portée par l'extrémité libre de la baïonnette 19, avec cette dernière. Un organe de poussée 39 porté par le système de translation 40 pousse alors les bobines empilées sur la broche, sur la baïonnette 18 (cf. figures 8 et 10).

Les baïonnettes 19 du porte-matière sont successivement mises en place en regard de la broche 9 pour être chargées, par la coopération du plateau rotatif 22 et du dispositif 14 de sélection de la position du porte-matière.

Il est possible de prévoir la disposition dans un tel appareil de chargement, d'une pluralité de broches aptes à être chargées simultanément comme décrit plus haut, et aptes à être affectées simultanément d'une rotation suivant un déplacement en arc de cercle de 90° qui met chacune d'elles en regard d'une baïonnette 19 du porte-matière, permettant ainsi le chargement simultané d'une pluralité de baïonnettes

Lorsque la broche 9 est déchargée de sa pile de bobines, elle est désaccouplée de la baïonnette sur laquelle a été transférée la pile de bobines qu'elle portait; le système de translation 40, tel que vérin par exemple, qui porte l'organe de poussée 38 auquel elle est associée, l'éloigne de la baïonnette chargée et le dispositif d'entraînement en rotation 40 l'entraîne suivant un mouvement de déplacement sectoriel de 90° pour la ramener dans sa position verticale de chargement.

Préalablement à l'opération de chargement des baïonnettes 19 en position horizontale, le porte-matière est tout d'abord déplacé de sa position d'axe vertical dans une position d'axe horizontal, par basculement de 90° autour d'un dispositif de basculement 37 approprié, pour mettre les baïonnettes 19 en position de chargement horizontale. Lorsque l'opération de chargement des baïonnettes est terminée, le porte-matière est ramené en position d'axe vertical par basculement autour du dispositif 37, en sens inverse.

Les mouvements de chargement des baïonnettes 19 d'un porte-matière peuvent être synchronisés conformément à la séquence d'opérations suivante:

Sequence I

- Arrivée des bobines au poste 5. Il n'y a pas d'attente à ce poste qui est alimenté à une cadence supérieure à celle des séquences suivantes.

Sequence II

- Constitution d'une pile de bobines sur la broche 9. Cadence continue pour les opérations suivantes:

- Préhension d'une bobine en 5.

- Présentation au poste 6.

- Arrondissage des arêtes.

- Mise en place sur la broche 9 d'un intercalaire (n fois).

- Présentation et lâcher de bobines sur la broche 9 (n fois).

n = nombre de bobines et d'intercalaires par pile.

Sequence III

- Déplacement sectoriel de la broche 9 pour la disposer horizontalement en regard d'une baïonnette ou clarinette 19 à charger.

- Ajustement et alignement de la broche 9 avec la baïonnette ou clarinette 19 à charger.

- Poussée des bobines de la broche 9 sur la baïonnette ou clarinette par l'organe de poussée 39.

- Retrait de la broche 9 et de l'organe de poussée 39.

Sequence IV

- Rotation et retour de la broche 9 au poste de chargement;

Sequence V

- Mise en place du chapeau au poste 13 avec nouvel alignement de la baïonnette par la mâchoire 24 - pressage vissage ou encliquetage.

- Positionnement du porte-matière pour chargement horizontal de la baïonnette ou clarinette suivante ou fin de chargement après la dernière pile.

La cadence de production de l'installation est celle des séquences II, III et IV.

Les autres séquences sont effectuées simultanément avec les séquences II, III et IV.

Dans le cas de la disposition d'une pluralité de broches animées d'un mouvement de rotation, on réalise une augmentation de la cadence de l'appareil et la cadence de production de l'installation est celle de la séquence III.

L'on obtient ainsi, conformément à cette variante de réalisation, un chargement encore plus rapide des portematière, avec une main-d'oeuvre très réduite, qui est, en outre, exonérée des tâches pénibles que représentent ces opérations.

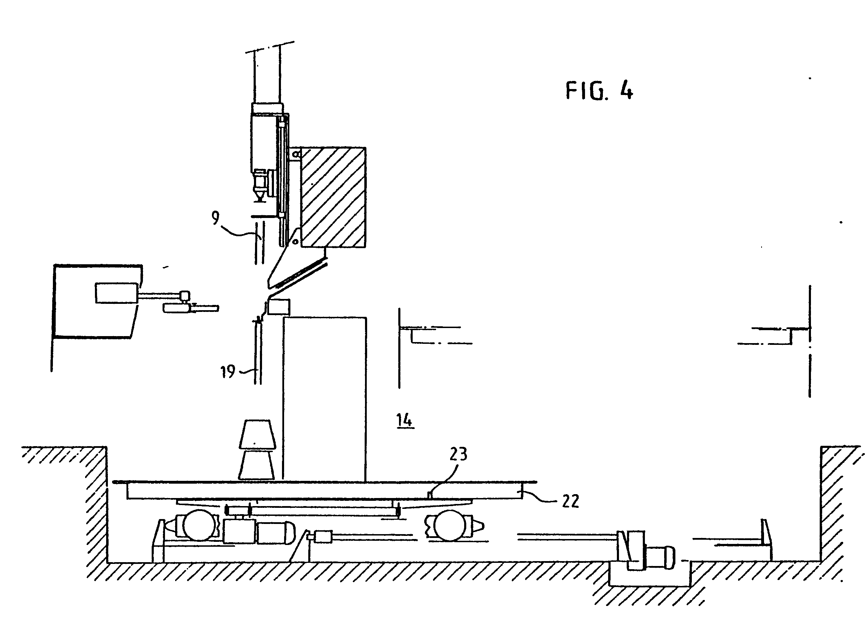

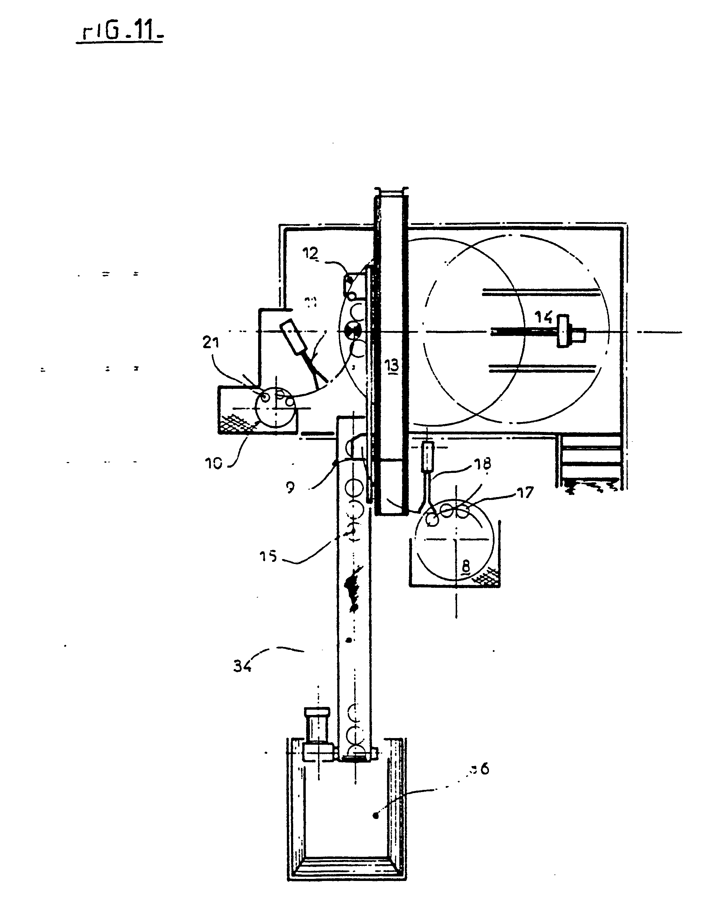

L'appareil de chargement décrit en référence aux figures 1 à 7 peut avantageusement être pourvu, selon une variante de réalisation représentée aux figures 11 à 14, d'un dispositif de déchargement des bobines des baïonnettes ou analogues d'un porte-matière; un tel dispositif de déchargement comprend une tige 30 qui porte a son extrémité inferiéure un moyen de préhension 31. Cette tige 30 est reliée à un dispositif 28 tel qu'un vérin, pneumatique, électrique ou mécanique, qui est apte à déplacer ladite tige axialement alternativement suivant un mouvement descendant et ascendant; le dispositif 28 est actionné, dans le cas où il est constitue par un vérin électrique ou mécanique, par un moteur d'entraînement 29.

De plus, la tige 30, avec son moyen de préhension 31, est entraînée en rotation de façon intermittente, par un système de rotation 32 approprié qui peut être un moteur ou un verin rotatif.

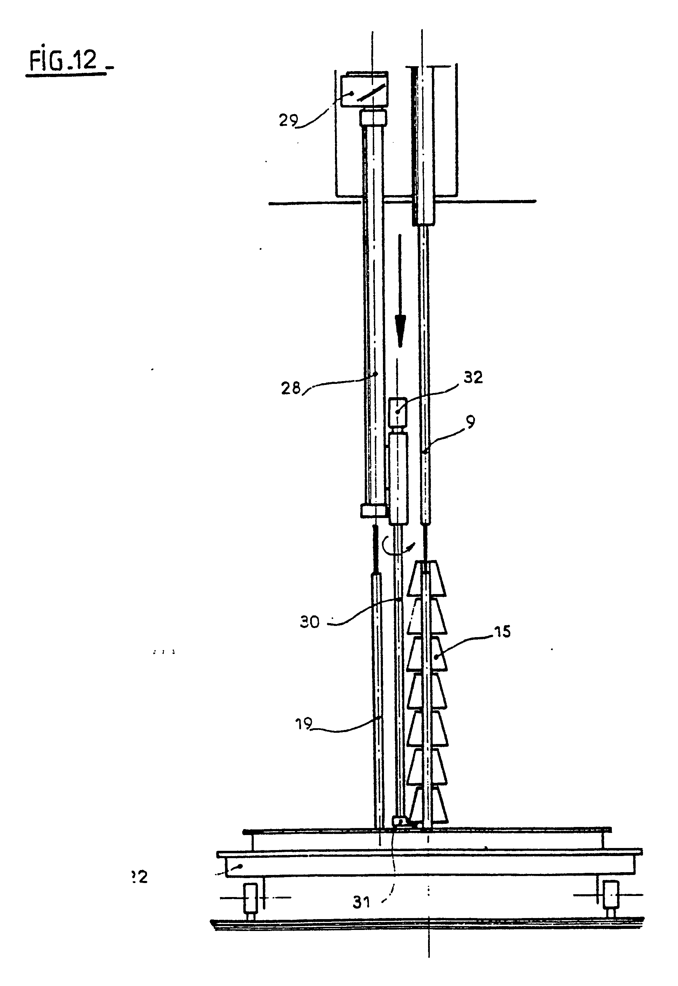

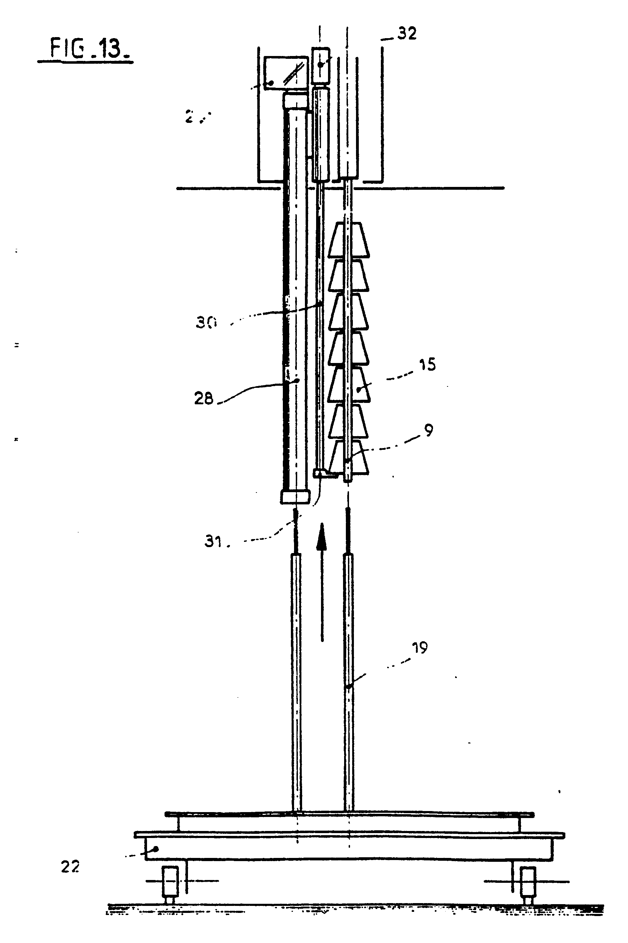

Conformément à cette variante de réalisation, pour réaliser le déchargement, la tige 30 est abaissée par le dispositif 28, tel que verin, pour se trouver en parallèle avec une baïonnette 19 d'un porte-matière chargée de bobines 15 à décharger, de telle manière que son moyen de préhension 31 vient se placer sous la dernière bobine, la plus basse, de la pile de bobines 15 portée par ladite baïonnette 19, tandis que la broche 9 est mise en place et verrouillée par son extrémité inférieure à l'extrémité supérieure de ladite baïonnette, comme décrit à la figure 12. La tige 30 est alors relevée par le dispositif 18, ce qui provoque l'entraînement par poussee par le moyen de préhension 31, de la pile de bobines 15, suivant un mouvement ascendant, pour transférer ladite pile sur la broche 9 (cf. figure 13). La baïonnette 19 déchargée est alors séparée, par déverrouillage, de la broche 8, comme décrit plus haut. Les bobines 15 sont alors déchargées de la broche 9, une à une, ainsi qu'on le décrira plus loin, pour tomber par gravité sur une bande 34 de réception et de tranfert vers une zone de stockage 36.

Le déchargement des bobines 15 une à une de la broche 9 sur la bande 34 est réalisé par la coopération de la rotation du moyen de préhension 31 de manière à l'écarter du dessous de la pile pour libérer la bobine inférieure 15 de la pile portée par la broche 9, avec l'action d'un dispositif de blocage 33 qui bloque en position la bobine 15 située juste au-dessus de la bobine inférieure à libérer, en sorte que seule la bobine inférieure de la pile tombe sur la bande 34, alors que les autres bobines sont maintenues sur la broche 9.

On décrira à présent dans ce qui va suivre, une pération de déchargement réalisée dans un appareil conforme à la variante de réalisation présentement décrite.

Un porte-matière dont les baïonnettes 19 sont chargées chacune d'une pile de bobines 15 ayant subi un traitement approprié, est amené sous l'emplacement de déchargement automatique des bobines. Comme décrit plus haut, le portematière est placé sur un plateau rotatif 22 pourvu d'un organe d'indexage 23 qui, après que le dispositif 14 de sélection de la position du porte-matière a réalisé le réglage grossier de la position de ce dernier, met, par translation et rotation du porte-matière, la baïonnette 19 à décharger, dans l'axe de la broche 9.

Le dispositif de vissage ou d'encliquetage 12 des chapeaux de serrage est alors mis en action dans le sens inverse à celui de l'opération de fermeture des chapeaux de serrage décrite plus haut, pour réaliser le dévissage (ou le désencliquetage) des chapeaux de serrage 21. Ces derniers sont alors saisis par le bras de préhension 11 qui les ramène au plateau rotatif 10 et au magasin 10a.

L'accouplement de l'extrémité supérieure de la baïonnette à décharger, avec l'extrémité inférieure de la broche 9 est alors réalisé comme décrit plus haut.

La tige 30 portant le moyen de préhension 31 à son extrémité inférieure est alors abaissée par le dispositif 28, pour mettre ledit moyen 31 au niveau de la base de la pile de bobines portée par la baïonnette 18 à décharger. La tige 30 est alors entraînée en rotation pour placer le moyen de prehension 31 sous la dernière bobine de la pile. La rotation de la tige est arrêtée et celle-ci est relevée avec le moyen de préhension 31, par le dispositif 28, entraînant avec elle dans son mouvement ascendant, la pile de bobines 15 de la baïonnette 19 sur la broche 9. La broche 9 est alors désaccouplée de la baïonnette déchargée, comme décrit plus haut. Les bobines 15 portées par la broche 9 sont déchargées une à une de cette dernière en imprimant une rotation au moyen de préhension 31, qui écarte temporairement ce dernier de la base de la dernière bobine, inférieure, de la pile, tandis que le dispositif de blocage 33 bloque en position la bobine 15 qui se trouve juste au-dessus de cette dernière bobine, qui, n'étant plus maintenue, tombe sur la bande convoyeuse 34, avec son disque intercalaire 17. Le disque intercalaire 17 est alors saisi, sur la bande 34, par le bras de préhension 18 qui le ramène dans le magasin 8 de disques intercalaires.

Le moyen de préhension 31 est alors ramené, par rotation, sous la dernière bobine 15 de la pile subsistant sur la broche 9 et le dispositif de blocage 33 est ouvert.

L'opération de libération d'une bobine et de blocage du reste de la pile est répétée autant de fois qu'il y a de bobines et d'intercalaires à décharger de la broche.

Les bobines 15 déchargées sur la bande 34 sont transférées jusqu'à la zone de stockage 36.

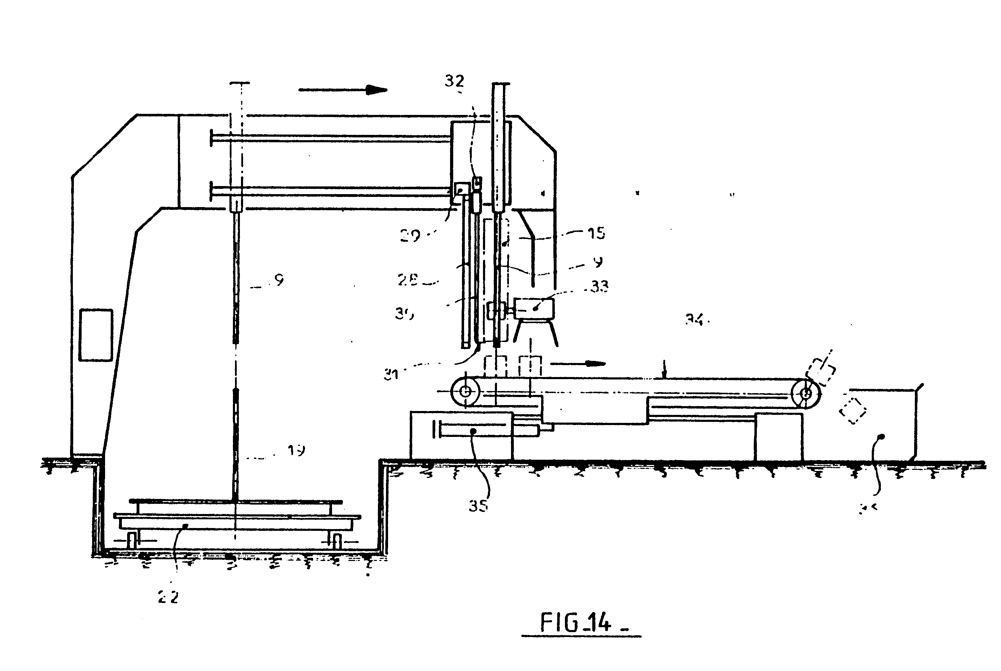

Conformément à cette variante de réalisation, la bande 34 de réception et de transfert est avantageusement escamotable au moyen d'un dispositif 35, pour ne pas contrarier les opérations de chargement qui peuvent être réalisées de façon concomitante par l'appareil. Ce dispositif 35 est avantageusement constitué par un vérin de poussée de la bande 34 dans le sens horizontal, par exemple vers la droite de la figure 14, en coopération avec des glissières (non représentées), pour libérer, dans l'appareil, la place nécessaire au chargement, en cas de besoin.

Le dispositif de déchargement conforme à cette variante de réalisation est commandé de manière à réaliser une synchronisation et une cadence appropriées des opérations de déchargement qu'il effectue, à l'aide d'une commande électrique ou pneumatique, ou d'une commande électrique et pneumatique combinée, éventuellement associée à des moyens de synchronisation électroniques tels que circuits imprimés, et à des moyens de programmation à horloge ou par ordinateur connus sous le nom d'automates programmables.

La synchronisation peut être réalisée de telle manière que pendant qu'une pile de bobines est en cours de déchargement d'une broche, une autre pile portée par une baïonnette du porte-matière soit en cours de déverrouillage par enlèvement de son chapeau de serrage, par exemple.

Cette synchronisation peut, par exemple, comprendre la séquence d'opérations suivante:

Sequence I
- Arrivée du porte-matière sous le poste de déchargement.

Sequence II
- Désencliquetage ou dévissage du chapeau de serrage.
- Fermeture de la mâchoire.
- Prise et dépose du chapeau de serrage.

Sequence III
- Descente de la broche 9 sur la baïonnette.
- Ouverture de la mâchoire.

- Descente système préhension.
- Rotation système préhension.
- Remontée système préhension.

Sequence IV

- Transfert broche 9.
- Fermeture système blocage 33.
- Rotation système préhension.
- Rotation inverse système de préhension.
- Ouverture système blocage 33.
- n fois (nombre de bobines sur pile).

Sequence V

- Transfert broche 9.
- La cadence de production de l'installation sera celle des séquences III, IV et V. Les autres séquences auront lieu, soit une seule fois (séquence I), soit simultanément (séquence II).

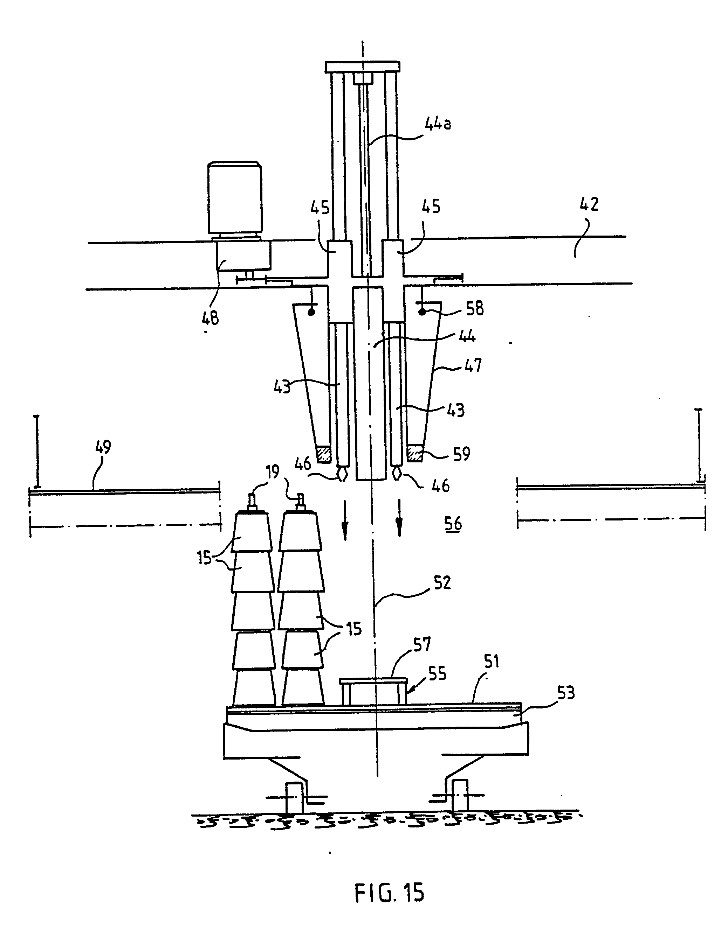

L'installation conforme à la présente invention comprend, en outre, un appareil de déchargement des bobines portées par un porte-matière, après extraction de celui-ci d'une machine de traitement de matières textiles ; l'appareil de déchargement représenté à titre d'exemple non limitatif aux figures 15 à 18 comprend un bâti 42 généralement horizontal qui supporte un dispositif 44-44a de déplacement vertical qui actionne au moins deux tiges 43 guidées dans des glissières 45 sensiblement perpendiculaires au bâti et solidaires de ce dernier et qui portent chacune à leur extrémité inférieure une pince de préhension 46. Le dispositif 44-44a de déplacement vertical entraîne les tiges 43 alternativement en un mouvement descendant et en un mouvement ascendant qui seront décrits de façon plus détaillée plus loin.

L'appareil de déchargement représenté aux figures 15 à 18 comporte, en outre, un organe de poussée 47 dont les caracteristiques et le fonctionnement seront également décrits plus loin.

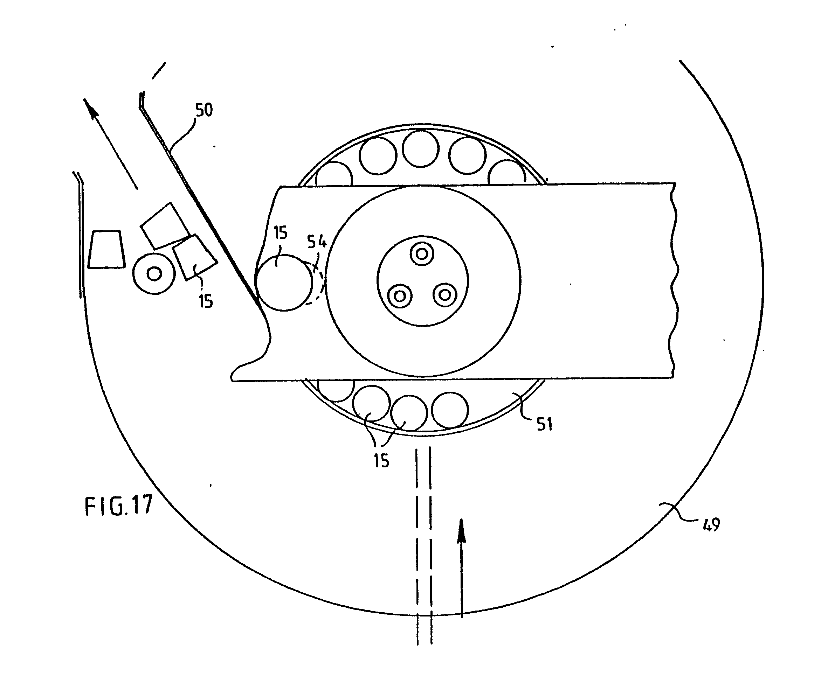

L'appareil de déchargement conforme à l'invention comporte également un dispositif d'entraînement en rotation 48 des tiges 43 avec le dispositif de déplacement vertical 44 de ces dernières, ainsi que des moyens de récupération 49 des bobines 15 déchargées du porte-matière et une goulotte 50 (cf. figure 17) d'évacuation desdites bobines des moyens de récupération 49 vers une zone de stockage (non représentée).

L'appareil de déchargement conforme à l'invention comprend, de plus, une plaque 51 posée directement sur la face supérieure de la base 53 du porte-matière et de même diamètre que cette dernière; la plaque 51 est percée d'une pluralité d'orifices 54 (cf. figure 17) dont le nombre correspond au nombre de baïonnettes ou de clarinettes 19 fixées à la base 53 du porte-matière, et dont le diamètre correspond sensiblement à celui des baïonnettes ou analogues 19.

La plaque 51 est pourvue, dans sa zone centrale, concentriquement à l'axe 52 de l'appareil de déchargement conforme à l'invention, d'un dispositif d'accrochage 55, de forme appropriée. La plaque 51 est simplement posée, et non fixée, sur la face supérieure de la base 53 du porte-matière.

Les moyens de récupération 49 des bobines déchargées des baïonnettes ou analogues 19 sont constitués, dans le mode de réalisation représenté aux figures 15 à 18, par une couronne dont l'orifice central 56 a un diamètre qui correspond sensiblement au diamètre de la base 53 du porte-matière et, donc, au diamètre de la plaque 51. L'on comprendra cependant aisément que ces moyens de récupération de bobines peuvent être constitués par une bande transporteuse continue ou par tout autre dispositif d'évacuation approprié connu, tout en demeurant dans le cadre de la présente invention.

Les moyens de récupération 49 sont placés sensiblement dans le même plan que les extrémités supérieures des baïonnettes 19 ou analogues, ou dans un plan situé un peu au-dessus de ce dernier.

Le fonctionnement de l'appareil de déchargement conforme à l'invention est le suivant: Pour réaliser le déchargement des bobines 15 empilées sur les baïonnettes ou analogues 19 d'un porte-matière, le dispositif de déplacement vertical 44-44a est tout d'abord actionné pour entraîner les tiges 43 en un mouvement descendant jusqu'au niveau du dispositif d'accrochage 55 solidaire de la plaque 51; à la fin de la course de descente des tiges 43, les pinces de préhension portées par l'extrémité inférieure desdites tiges 43 se referment sur la barre 57 du dispositif d'accrochage 55 de la plaque 51. Les tiges 43, entraînées par le dispositif de déplacement vertical 44-44a, amorcent alors un mouvement de déplacement linéaire ascendant, dans lequel elles entraînent la plaque 51. Au cours de son mouvement ascendant, la plaque 51 entraîne les bobines 15 empilées sur les baïonnettes ou analogues 19, qui sont transférées sur la plaque, sous l'action de poussée exercée par cette dernière sur lesdites bobines 15, qui les force à sortir par l'extrémité supérieure desdites baïonnettes ou analogues 19.

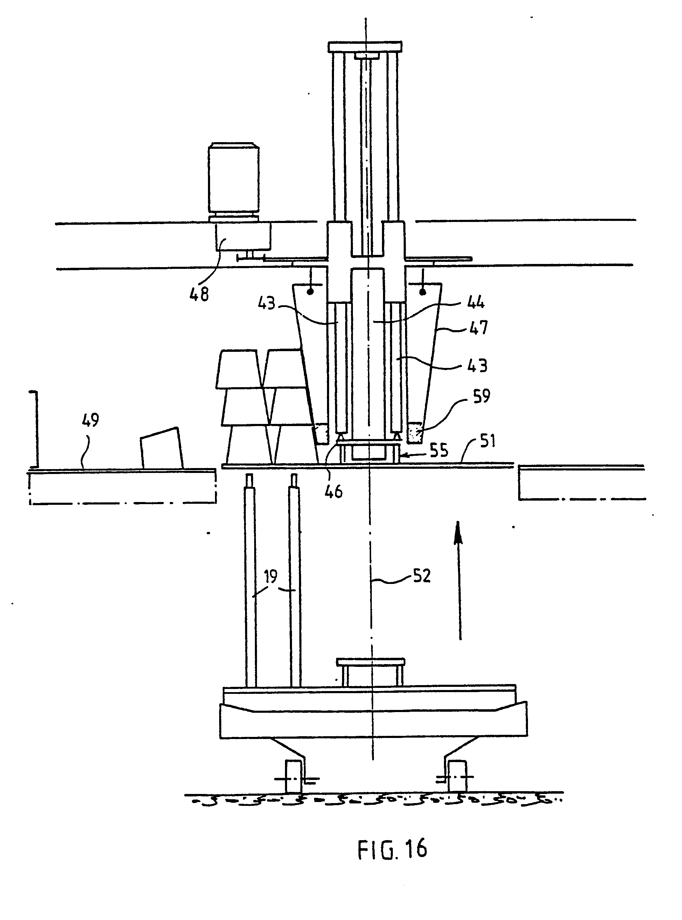

Lorsque le dispositif de déplacement vertical 44 atteint, avec les tiges 43, sa position externe supérieure, dans laquelle la plaque 51 solidarisée avec les tiges 43 par l'intermédiaire des pinces de préhension 46, est placée un peu au-dessus de l'extrémité des baïonnettes 19 libérées des bobines 15 qui y étaient empilées, et dans le même plan que les moyens de récupération 49 (cf. figure 16), le dispositif de rotation 48 entre en action pour entraîner en rotation le dispositif de course verticale 44 avec les tiges 43 qui en sont solidaires et avec la plaque 51 rendue temporairement solidaire des tiges 43. La vitesse de rotation imprimée à la plaque 51 par le dispositif d'entraînement en rotation 48 est telle qu'elle crée une force centrifuge suffisante pour éjecter les bobines 15 vers la périphérie de la plaque 51 et de là, sur les moyens de récupération 49 (cf. figure 17).

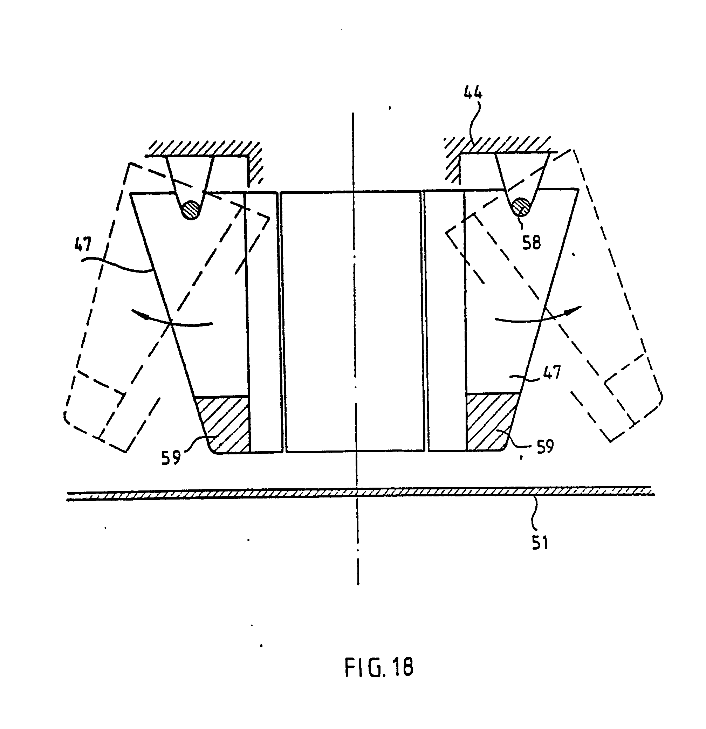

Le bâti 42 de l'appareil de déchargement conforme à l'invention porte en outre un organe de poussée 47 articulé sur le bâti au moyen d'un pivot 58, disposé à proximité des tiges 43, extérieurement à ces dernières par rapport à l'axe 52 de l'appareil. Sous l'effet de la rotation imprimée par le dispositif d'entraînement en rotation 48, aux organes 44, 43 et 51, l'organe de poussée 47 se déplace angulairement (cf. figures 16 et 18) autour de son articulation 58, sous l'effet de la force centrifuge résultant de ladite rotation, exerçant ainsi une poussée sur les bobines empilees sur la plaque 51, et contribuant à les éjecter de ladite plaque 51 sur les moyens de récupération 49.

Selon un mode de réalisation avantageux de l'organe de poussée 47, celui-ci est constitué par un tronc de c*one inversé 47, qui se compose d'une pluralité de segments longitudinaux articulés à leurs extrémités supérieures, autour de pivots 58, et qui portent chacun une masse 59 à leur extrémité inférieure. Sous l'action de la force centrifuge engendrée par la rotation des organes 44 et 43 entraînés en rotation par le dispositif 48, ces masses 59 contribuent de manière efficace à l'éjection des bobines 15 empilées sur la plaque 51 vers la périphérie de cette dernière et de là sur les moyens de récupération 49.

Les bobines 15 éjectées de la sorte sont reçues sur les moyens de récupération, qui sont avantageusement constitués, dans le mode de réalisation représenté aux figures 15 à 18, par une couronne 49 entraînée en rotation par un dispositif d'entraînement en rotation (non représenté) approprié, qui évacue les bobines au fur et à mesure qu'elles sont poussées sur elle, jusqu'à une zone de stockage (non représentée) vers laquelle elles sont de préférence dirigées au moyen d'une goulotte 50 (cf. figure 17).

Lorsque la totalité des bobines d'un porte-matière est déchargée de la plaque 51, les tiges 43 avec la plaque 51 qui en est temporairement solidaire, sont entraînées par le dispositif 44 de déplacement vertical pour effectuer un mouvement descendant pour replacer la plaque 51 en position sur la face supérieure de la base 53 du porte-matière; la détection de la fin de course descendante des tiges 43 provoque l'ouverture des pinces de préhension 46 et la désolidarisation de la plaque 51 qui demeure en place sur la base 53 du porte-matière, alors que les tiges 43 remontent pour prendre leur position inactive représentée à la figure 15.

Les dispositifs de commande des mouvements linéaires ou rotatifs imprimés aux organes qui constituent l'appareil de déchargement conforme à la présente invention, peuvent être de tous types connus, et notamment être des dispositifs de commande mécanique, électrique, pneumatique ou hydraulique, ou des dispositifs de commande combinant deux ou plusieurs de ces systèmes. De même, la succession relative des mouvements linéaires ou rotatifs imprimés auxdits organes peut être commandée par tous moyens connus de l'Homme de l'Art, tels que commande à cames, commande mécanique, électrique, pneumatique ou hydraulique, déclenchée par une horloge ou par des cellules photo-électriques, ou commande programmée par un système électronique, notamment un ordinateur.

Bien que l'on ait fait référence, dans la description qui précède, uniquement au déchargement de bobines empilées sur les baïonnettes ou analogues d'un porte-matière, il va de soi que l'appareil de déchargement conforme à l'invention réalise le déchargement non seulement des bobines empilées sur une baïonnette, mais également des plaques intercalaires éventuellement interposées entre deux ou plusieurs bobines superposées. De même, bien que l'on ait fait référence, dans la description qui précède, uniquement aux orifices de passage des baïonnettes pratiqués dans les plaques d'extraction des bobines, l'invention s'étend néanmoins également à des plaques analogues aux plaques 51 comportant, outre les orifices 54 de passage des baïonnettes 19 ou analogues, également d'autres orifices tels que des orifices (non représentés) d'évacuation du bain de traitement qui permettent le retour du bain résiduel subsistant sur la plaque et dans les bobines, dans la machine de traitement pendant le mouvement ascendant de la plaque 51.

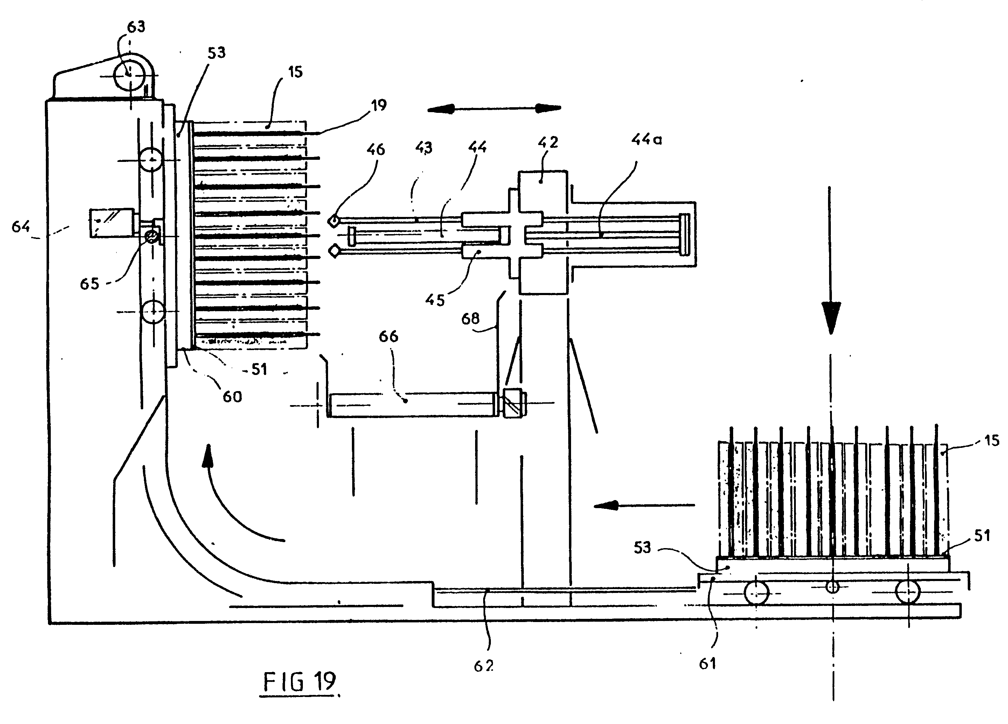

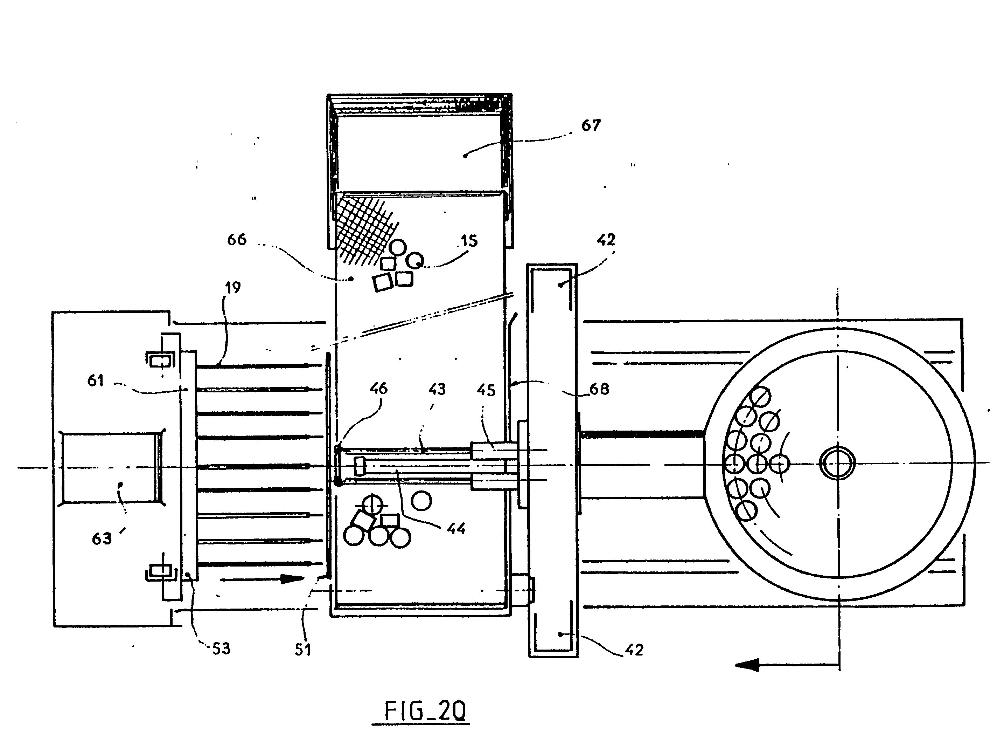

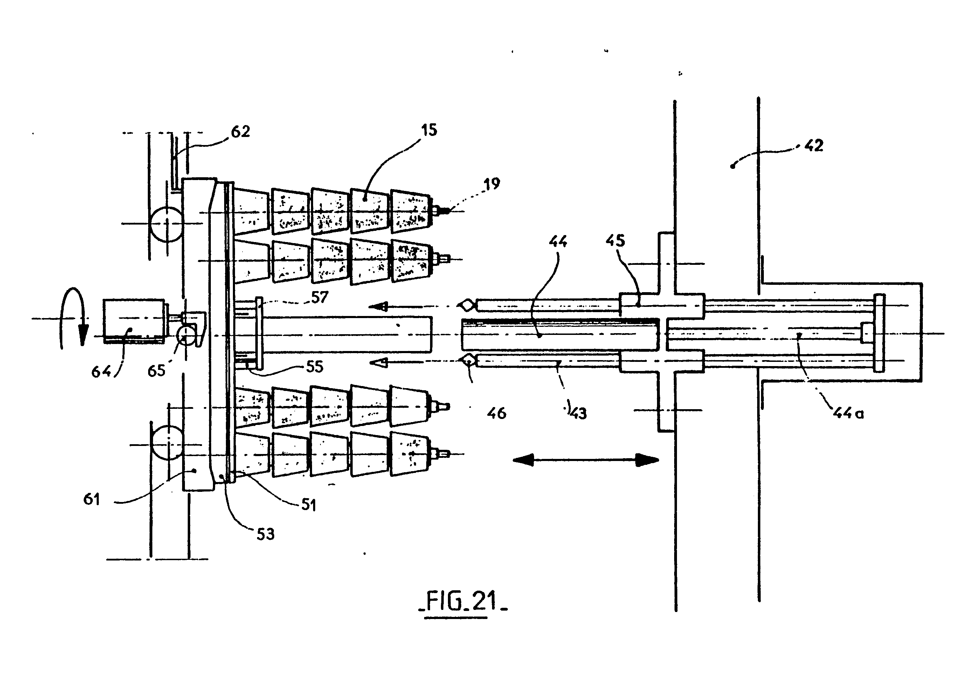

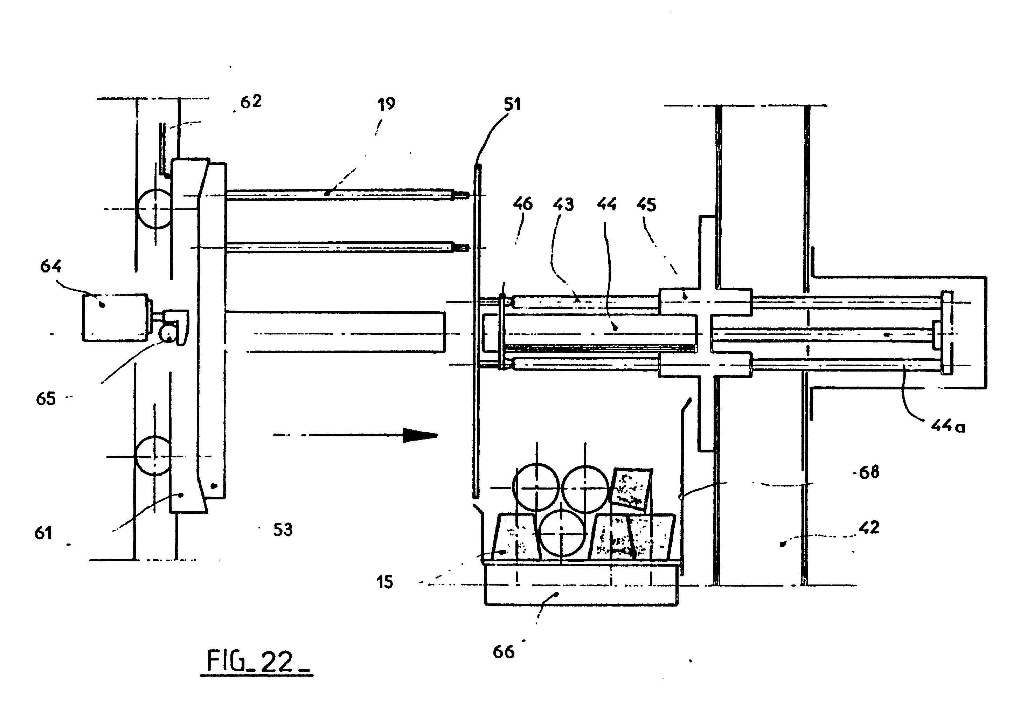

Dans la variante de réalisation de l'appareil de déchargement représenté aux figures 19 à 22, qui permet le déchargement de matières textiles portées par des baïonnettes d'un porte-matière disposées horizontalement, le porte-matière 60 portant la matière textile sortant d'une machine de traitement est placé sur un chariot de translation 61 et bridé sur ce dernier. Ce chariot 61 est entraîné par au moins un système de tirage 62 sur un plan horizontal puis sur un plan vertical, au moyen du système de commande de translation 63 et vient se placer dans l'axe du système d'extraction, composé, comme décrit plus haut, des tiges 43 munies à leurs extrémités des pinces de préhension 46, du dispositif 44-44a de déplacement horizontal, supporté par un bâti 42, au moyen du système de guidage 45.

Le chariot 61 une fois en place, en position verticale, axé par des dispositifs de détection et de fin de course appropriés, est bloqué par la coopération du dispositif de retenue et de blocage 64 porté par le bâti de l'appareil et de l'organe de blocage 65 porté par le chariot.

Le système de dégagement des bobines est identique à celui décrit plus haut en référence aux figures 15 à 18, aux différences près que le déchargement est horizontal et que les tiges 43 sont animées d'un mouvement de va-et-vient horizontal, et que la plaque 51 n'est pas entraînée en rotation, non plus que les tiges 43. Les bobines 15 tombent par gravité sur le dispositif de transfert 66 et sont acheminées vers les zones de stockage 67.

L'appareil de déchargement automatique qui vient d'être décrit, est commandé de manière à réaliser une synchronisation et une cadence appropriées des opérations de déchargement qu'il réalise, la commande pouvant être électrique, pneumatique, électro-pneumatique combinée, hydraulique, éventuellement associée à des moyens de synchronisation électroniques tels que circuits imprimés et à des moyens de programmation connus sous le nom d'automates programmables.

Le cycle de déchargement se déroule, par exemple, comme suit:

1. Arrivée du porte-matière sur le chariot de translation 61;

2. Brigade du porte-matière sur ledit chariot;

3. Transfert du porte-matière de la postition horizontale à la position verticale à l'aide du chariot 61;

4. Brigade du chariot à l'emplacement du déchargement;

5. Mouvement de translation horizontale du système d'extraction 43, 45 vers le porte-matière;

6. Préhension de la plague 51 par les pinces 46 du système d'extraction;

7. Mise en route du tapis de transfert 66 des bobines;

8. Mouvement de translation inverse du système d'extraction 43, 46 dans le sens horizontal, entraînant avec lui la plaque 51 saisie, par l'intermédiaire de son dispositif d'accrochage 55, 57, pour effectuer le déchargement des bobines;

9. Remise en place de la plaque 51 sur le socle 53 du porte-matière;

10. Ouverture des pinces de préhension 46;

11. Déverrouillage du chariot 61 sur lequel est bridé le porte-matière;

12. Retour du chariot 61 au poste de chargement des porte-matière;

13. Retour du système d'extraction 43, 46 en position repos;

14. Arrêt du tapis de transfert 66;

Les phases 6 et 7 sont simultanées.

Les phases 10 et 11 sont simultanées.

Les phases 12 et 13 sont également simultanées.

Ainsi que cela ressort de ce qui précéde, l'invention ne se limite nullement à ceux de ses modes de mise en oeuvre, de réalisation et d'application qui viennent d'être décrits de façon plus explicite; elle en embrasse au contraire toutes les variantes qui peuvent venir à l'esprit du technicien en la matière, sans s'écarter du cadre, ni de la portée de la présente invention.

**Revendications**

1. Installation propre à permettre le chargement automatique de matières textiles sur des porte-matière destinés à être introduits dans des appareils de traitement de matières textiles comprenant au moins une enceinte (1) de stockage en vrac des matières textiles à charger, notamment sous forme de bobines (15), au moins un dispositif (2) d'extraction des bobines ou analogues de matières textiles hors de ladite enceinte, des moyens de transfert des bobines, un dispositif (5) de préhension des bobines pour les amener en bonne position au dispositif suivant, éventuellement un dispositif (6) de calibrage et d'arrondissage des arêtes des bobines ou analogues, un dispositif (7) de mise en place de disques intercalaires (17) comprenant un magasin (8) pour ces disques, des moyens de préhension des bobines préparées sur ce dispositif (7) pour les réunir suivant des piles, des moyens pour déplacer lesdites piles et les amener en position dans le prolongement de l'extrémité supérieure d'une baïonnette ou d'une clarinette (19) de porte-matière, des moyens d'accouplement (25) de la partie inférieure d'un support de pile (9) avec la partie supérieure de la baïonnette ou de la clarinette (19), un magasin de chapeaux de serrage de piles de bobines ou analogues transférées sur les baïonnettes (19) associé à un organe de préhension desdits chapeaux et de transfert de ceux-ci successivement sur chacune des baïonnettes ou analogues chargée de bobines (15) pour verrouiller la pile portée sur ladite baïonnette ou analogue, ladite installation étant caractérisée en ce que les bobines (15) sont mises en place sur le support ou broche (9) par empilage les unes au-dessous des autres, le transfert de la broche (9) à la baïonnette ou clarinette (19) ayant lieu après positionnement rigoureux de l'extrémité supérieure de la baïonnette ou clarinette à la verticale précise de l'extrémité inférieure de la broche (9) à l'aide d'un dispositif (24) et en ce qu'elle comprend un appareil automatique de déchargement des matières textiles des porte-matière, après traitement, lequel appareil de déchargement (42, 43,...)se compose d'organes d'extraction (43,...) des bobines ou analogues animés d'un mouvement de translation alternatif et de moyens de récupération (49) des bobines ou analogues extraites du porte-matière par lesdits moyens d'extraction, ladite installation étant encore caractérisée en ce qu'elle comprend des moyens de commande de la cadence de chargement etde l'appareil automatique de déchargement susdit.

2. Installation selon la revendication 1, caractérisée en ce que la broche (9) de l'appareil de chargement est pourvue à son extrémité inférieure d'un organe de préhension relevable avec lequel ladite broche (9) traverse, en un mouvement descendant, une bobine (15) à embrocher, en même temps que l'intercalaire (17) qui lui est associé, en leurs centres, puis soulève par un mouvement ascendant, ladite bobine (15) et son intercalaire (17) pour former la pile de bobines.

3. Installation selon la revendication 1 ou la revendication 2, caractérisée en ce que le dispositif de positionnement de l'extrémité supérieure de la baïonnette ou analogue (19) à la verticale précise de l'extrémité inférieure de la broche (9) est constitué par une mâchoire (24) dont les deux parties coopèrent entre elles par rapprochement en position ouverte suivant une direction angulaire par rapport à l'horizontale ou à la verticale, sur la partie supérieure de la baïonnette ou analogue (19), la fermeture de la mâchoire autour de ladite partie supérieure étant déterminée par la fin de la course d'approche de la mâchoire et provoquant le positionnement exact de ladite partie supérieure sous l'extrémité inférieure de la broche (9).

4. Installation selon l'une quelconque des revendications 1 à 3, caractérisée en ce que les moyens d'accouplement de la partie supérieure de la baïonnette ou analogue (19) avec la partie inférieure de la broche (9) de l'appareil de chargement sont constitués par des pièces (25) portées respectivement par l'une desdites parties, qui s'encastrent dans l'extrémité de l'autre partie lorsque la broche (9) et la baïonnette (19) ou analogue sont dans le prolongement exact l'une de l'autre.

5. Installation selon l'une quelconque des revendications précédentes, caractérisée en ce qu'elle comprend un convoyeur (4) d'amenée des bobines (15) issues du dispositif d'extraction (2) au dispositif (5) de préhension des bobines dont le bras de préhension (16) animé d'un mouvement de rotation est commandé par une cellule photo-électrique de détection du sens de la bobine (15) placée à l'extrémité du convoyeur (4), pour rectifier, en cas de besoin, le sens de la bobine (15) saisie par ledit bras de préhension (16).

6. Installation selon l'une quelconque des revendications 1 à 5, caractérisée en ce qu'elle comprend en outre un dispositif de pressage des bobines (15) qui coopère avec la dernière bobine en position à l'extrémité supérieure de la broche (9), pour presser les bobines hors de la broche et les pousser sur la baïonnette ou analogue (19).

7. Installation selon l'une quelconque des revendications 1 à 6, caractérisée en ce qu'elle est conçue pour permettre le chargement des baïonnettes ou des clarinettes (19) du porte-matière alors que celles-ci se trouvent en position horizontale et en ce que, dans ce but, la broche (9) sur laquelle ont été empilées les bobines (15) est associée à un dispositif de rotation (41) propre à faire tourner la broche (9) suivant un mouvement sectoriel de l'ordre de 90°, pour la faire passer de sa position verticale initiale d'empilement des bobines (15), à une position horizontale en regard d'une baïonnette (ou clarinette) (19) à charger, d'un porte-matière, elle-même en position horizontale.

8. Installation selon la revendication 7, caractérisée en ce qu'à la broche (9) sont associés des moyens constitués par un organe de poussée (39) affecté d'un mouvement linéaire et commandé par un dispositif approprié (38) pour le transfert des bobines (15) empilées sur cette dernière, sur la baïonnette à charger (19).

9. Installation selon la revendication 8, caractérisée en ce que la position de l'organe de poussée (39) est ajustée par translation d'un vérin (40) ou analogue qui le porte, pour mettre la broche (9) à décharger exactement dans l'axe de la baïonnette (19) à charger.

10. Installation selon l'une quelconque des revendications 7 à 9, caractérisée en ce que le porte-matière est placé sur un plateau rotatif (22) dont le châssis est articulé sur un bâti de l'installation par l'intermédiaire d'un axe (37) autour duquel ledit châssis est apte à effectuer avec le plateau rotatif (22) et le porte-matière qu'il porte un mouvement sectoriel, de l'ordre de 90°, pour faire passer le porte-matière de sa position d'axe vertical à une position d'axe horizontal.

11. Installation selon l'une quelconque des revendications 1 à 10, caractérisée en ce qu'elle est pourvue d'un dispositif de déchargement des matières textiles des porte-matière, lequel dispositif est essentiellement constitué par au moins une tige (30) pourvue de moyens de préhension (31), des bobines à une de ses extrémités et associée d'une part à des moyens (28) propres à la déplacer axialement d'un mouvement alternatif et d'autre part à un moteur ou analogue (32), qui l'entraine temporairement en rotation, laquelle tige (30) est agencée pour lui permettre de coopérer avec une baïonnette (19) du porte-matière et avec la broche (9) d'empilement des bobines (15), pour transférer les bobines portées par ladite baïonnette sur ladite broche, pour réaliser le déchargement desdites bobines.

12. Installation selon la revendication 11, caractérisée en ce qu'elle est pourvue d'un organe de blocage (33) qui coopère d'une part avec les moyens de préhension (31) susdits et d'autre part avec la broche (9) sur laquelle les bobines (15) ont été transférées d'une baïonnette (19) du porte-matière par ladite tige (30) les moyens de préhension étant temporairement entrainés en rotation pour libérer la dernière bobine, ou bobine inférieure, de l'empilement porté par la broche (9) pendant que l'organe de blocage (33) retient la pile de bobines qui se trouve au-dessus de la bobine inférieure.

13. Installation selon la revendication 12, caractérisée en ce que les mouvements de rotation temporaire des moyens de préhension (31) susdits et de blocage de l'organe de blocage (33), ainsi que les arrêts de ladite rotation et la libération séquentiels de l'organe de blocage (33) sont commandés de façon synchronisée par tous moyens appropriés tels que commande électrique ou pneumatique, ou commande électrique et pneumatique combinée, éventuellement associée à des moyens de synchronisation électroniques tels que circuits imprimés et à des moyens de programmation à horloge ou par ordinateur connus en eux-mêmes sous le nom d'automates programmables.

14. Installation selon l'une quelconque des revendications 11 à 13, caractérisée en ce qu'elle est pourvue d'une bande (34) de réception et de transfert qui reçoit les bobines (15) libérées de la broche (9) par la coopération de la rotation des moyens de préhension (31) portés par la tige (30) susdite et de l'action de blocage exercée lar l'organe la blocage (33) susdit sur les bobines (15) qui subsistent sur la broche (9), et qui les transfère vers une zone de stockage appropriée (36).

15. Installation selon la revendication 14, caractérisée en ce que la bande (34) de réception et de transfert est associée à un dispositif (35) propre à la rendre escamotable temporairement, dans le but de ne pas contrarier une opération de chargement d'un porte-matière.

16. Installation selon la revendication 1, caractérisée en ce que l'appareil automatique de déchargement comprend des organes d'extraction (43) coopérant avec une plaque (51) ou analogue posée sur la face supérieure du socle (53) du porte-matière, percée d'autant d'orifices, d'un diamètre approprié, que le porte-matière porte de baïonnettes ou clarinettes (19), et pourvue dans sa zone centrale, d'un dispositif d'accrochage (55) avec lequel les organes d'extraction (43) susdits se mettent en prise lors d'une première phase de leur mouvement pour écarter ladite plaque du porte-matière lors de leur mouvement subséquent, ladite plaque (51) entraînant alors avec elle les bobines ou analogues (15) empilées sur les baïonnettes ou clarinettes (19), pour dégager lesdites bobines ou analogues des baïonnettes ou clarinettes et déterminer leur éjection sur les moyens de récupération (49) susdits.

17. Installation selon la revendication 16, caractérisée en ce que les moyens de récupération (49) sont disposés dans un plan qui concîde sensiblement avec le plan dans lequel se trouvent les extrémités supérieures des baïonnettes ou clarinettes (19) portées par le porte-matière ou qui est légérement au-dessus dudit plan.

18. Installation selon l'une des revendications 16 et 17, caractérisée en ce que les organes d'extraction des bobines (15) ou analogues, comprennent des tiges (43) ou analogues animées d'un mouvement alternatif, pourvues à une de leurs extrémités de pinces de préhension (46) du dispositif d'accrochage (55) porté par la plaque (51) susdite, lesquelles tiges (43) entrainent, par l'intermédiaire de leurs pinces de préhension (46), ladite plaque (51) jusqu'au-delà de l'extrémité des baïonnettes ou clarinettes (19), dans le plan des moyens de récupération (49) des bobines (15) ou analogues dégagées des baïonnettes ou clarinettes par le mouvement de ladite plaque (51).

19. Installation selon l'une quelconque des revendications 16 à 18, caractérisée en ce que lesdits organes d'extraction comportent, en outre, au moins un organe (47) articulé sur un bâti (42), qui entoure les tiges (43) susdites et qui pousse les bobines (15) ou analogues dégagées des baïonnettes (19) ou analogues, sur les moyens de récupération (49) desdites bobines ou analogues.

20. Installation selon la revendication 19, caractérisée en ce que ledit organe (47) présente la forme d'un c*one inversé et se compose d'une pluralité de segments longitudinaux articulés sur le bâti (42) et comportant, à une de leur extrémité, une masse de poussée (58) des bobines (15) dégagées des baïonnettes (19) ou analogues par le mouvement de ladite plaque (51), sur les moyens de récupération (49).

21. Installation selon l'une quelconque des revendications 16 à 20, caractérisée en ce que les moyens de récupération sont constitués par une couronne (49) périphérique par rapport au porte-matière, située un peu au-dessus du plan où se trouvent les extrémités supérieures des baïonnettes (19) ou analogues.

22. Installation selon l'une quelconque des revendications 16 à 21, caractérisée en ce que les moyens de récuperation sont constitués par une bande transporteuse sans fin.

23. Installation selon l'une quelconque des revendications 16 à 22, caractérisée en ce qu'elle comprend, en outre, un dispositif d'entraînement en rotation (48) des tiges (43) à l'extrémité desquelles est accrochée ladite plaque (51) portant les bobines (15) dégagées des baïonnettes (19) ou analogues, qui entre en action à la fin du mouvement ascendant desdites tiges, lorsque la plaque (51) parvient sensiblement au niveau des moyens de récupération (49) et entraîne la plaque (51) en rotation à une vitesse suffisante pour éjecter les bobines (15) portées par ladite plaque (51) vers les moyens de récupération (49), sous l'effet de la force centrifuge résultant de l'entraînement en rotation de ladite plaque (51).

24. Installation selon l'une quelconque des revendications 16 à 23, caractérisée en ce que les moyens de récupération sont entrainés en déplacement à l'aide d'un dispositif d'entraînement approprié pour évacuer les bobines (15) ou analogues qui sont éjectées sur lesdits moyens, vers un emplacement de stockage.

25. Installation selon l'une quelconque des revendications 16 à 24, caractérisée en ce que les moyens de récupération en mouvement coopèrent avec une goulotte (50) ou analogue qui canalise les bobines (15) évacuées par lesdits moyens, vers un emplacement de stockage.

26. Installation selon l'une quelconque des revendications 16 à 25, caractérisée en ce que la plaque (51) comporte en outre des orifices d'évacuation du bain de traitement qui permettent le retour du bain résiduel subsistant sur la plaque et dans les bobines, dans la machine de traitement, pendant le mouvement ascendant de la plaque (51).

27. Installation selon l'une quelconque des revendications 16 à 26, caractérisée en ce que les mouvements linéaires et rotatifs imprimés aux organes de l'installation sont commandés par des systèmes à commande mécanique et/ou électrique et/ou pneumatique et/ou hydraulique et en ce que la succession desdits mouvements est commandée par un système à cames ou par un système mécanique, électrique, pneumatique ou hydraulique à commutations de courses commandées par un système d'horloge ou par des cellules photo-électriques, ou encore par un programme d'ordinateur approprié.

28. Installation selon la revendication 16, caractérisée en ce que les organes d'extraction (43) sont disposés suivant un axe horizontal, de même que le porte-matière, dont les baïonnettes (19) sont placées suivant des axes horizontaux parallèles, tandis que la plaque (51) portée par la face supérieure du socle (53) du porte-matière est disposée, en position de déchargement, sensiblement verticalement, le porte-matière étant amené de sa position à axe vertical dans laquelle les bobines (15) qu'il porte sont soumises, dans des appareils de traitements appropriés, à différents traitements tels que teinture, blanchiment, essorage, séchage, etc..., à une position d'axe horizontal dans laquelle les bobines sont déchargées, par un chariot de translation (61) sur lequel le porte-matière est bridé et dont la translation est effectuée par au moins un dispositif de tirage (62) approprié qui entraîne ledit chariot sur un plan horizontal puis sur un plan vertical, en position dans l'axe des organes d'extraction susdits, et qui est commandé par un dispositif (63) de commande de translation approprié.

29. Installation selon la revendication 28, caractérisée en ce que le chariot de translation (61) est pourvu de moyens de blocage (65) en position de déchargement qui coopèrent avec un organe de blocage (64) monté sur le bâti de l'appareil, dans l'axe des organes d'extraction (43).

30. Installation selon le revendication 28, caractérisée en ce qu'elle est équipée d'une bande transporteuse (66) qui reçoit les bobines extraites des baionnettes (19) par la coopération du dispositif d'extraction (43) et de la plaque (51), qui tombent par gravité sur ladite bande (66) en étant guidée par une t*ole de guidage (68) ou analogue et qui sont amenées par ladite bande à une zone de stockage (67) appropriée.

31. Installation selon la revendication 28, caractérisée en ce que la mise en position exacte du chariot de translation dans l'axe des organes d'extraction est contr*olée par des dispositifs de fin de course et de détection de position appropriés, préalablement au blocage dudit chariot dans la position voulue.

32. Procédé de chargement et de déchargement automatique de matières textiles, notamment en bobines, sur un porte-matière dans lequel on extrait des bobines ou analogues à charger sur un porte-matière d'une enceinte de stockage, on transfère les bobines extraites jusqu'à un poste de poste d'intercalaires après passage éventuel à un poste d'arrondissage des arêtes et de calibrage de leur diamètre, on forme des piles de bobines sur un support, on transfère une à une les piles formées sur une baïonnette, clarinette, virole ou analogue d'un porte-matière et on verrouille la pile transférée sur la baïonnette ou analogue, au moyen d'un chapeau de serrage ou analogue, caractérisé en ce que chaque pile est formée sur une broche, par empilage des bobines les unes au-dessous des autres, lors de mouvements alternatifs de la broche, et en ce que le déchargement rapide et automatique des bobines ou analogues portées par le porte-matière extrait d'une machine de traitement de matières textiles ou analogues est effectué par dégagement de l'ensemble des bobines d'une pile de bobines empilées sur une baïonnette ou analogue du porte-matière.

33. Procédé selon la revendication 32, caractérisé en ce que toutes les bobines sont dégagées simultanément par un mouvement de translation imprimé à une surface sous-jacente aux bobines, qui pousse les bobines empilées sur les baïonnettes jusqu'à l'extrémité libre de celles-ci.

34. Procédé selon la revendication 33, caractérisé en ce que le mouvement de ladite surface est un mouvement vertical ascendant et en ce que ladite surface plane est entraînée en rotation à la fin de sa course ascendante à une vitesse propre à créer une force centrifuge qui éjecte les bobines de ladite surface plane en rotation, vers des moyens de récupération animés d'un mouvement propre à évacuer les bobines vers une zone de stockage.

**Patentansprüche**

1. Einrichtung zum automatischen Laden von Textilien auf Materialträger, die dazu bestimmt sind, in Apparate zur Verarbeitung von Textilien eingeführt zu werden, mit zumindest einem Behälter (1) zur losen Lagerung der zu ladenden Textilien, insbesondere in Form von Spulen (15) mit zumindest einer Vorrichtung (2) zur Entnahme der Textilspulen o. dgl. aus dem Behälter, Transportmittel für die Spulen, eine Vorrichtung (5) zum Greifen der Spulen, um sie in gute Position für die nachfolgende Vorrichtung zu bringen, ggf. eine Vorrichtung (6) zum Kalibrieren und Runden der Anschläge der Spulen o. dgl., eine Vorrichtung (7) zum Einbringen von Zwischenlegscheiben (17), die ein Magazin (8) für die Scheiben aufweist, Mittel zum Ergreifen der vorbereiteten Spulen auf der Vorrichtung (7), um sie nachfolgend zu Stapel zu vereinigen, Mittel, um die Stapel zu verschieben und sie in eine Position in der Verlängerung des oberen Endes eines Bajonettes oder Rohres (19) des Materialträgers zu bringen, Mittel (25) zum Kuppeln des unteren Teiles eines Stapelträgers (9) mit dem oberen Teil des Bajonetts oder Rohres (19), ein Magazin an Kappen zum Klemmen der auf die Bajonette (19) gebrachten Stapel an Spulen o. dgl., das mit einem Organ zum Greifen der Kappen und zum nacheinanderfolgenden Überbringen derselben auf jede der Bajonette o. dgl., die mit Spulen (15) beladen sind, um den vom Bajonett o. dgl. getragenen Stapel zu verriegeln, wobei die Einrichtung dadurch gekennzeichnet ist, daß die Spulen (15) durch Aufstapeln einer unter der anderen auf dem Träger oder Spindel (9) in Position gebracht werden, daß das Überbringen der Spindel (9) auf das Bajonett oder Rohr (19) nach einem genauen Positionieren des oberen Endes des Bajonetts oder Rohres in die exakte Vertikale des unteren Endes der Spindel (9) mit Hilfe einer Vorrichtung (24) stattfindet, und daß sie ein automatisches Endladegerät der Textilien von den Materialträgern nach der Verarbeitung aufweist, wobei das Entladegerät (42, 43..) Abziehorgane (43,..), die zu einer Hin- und Herbewegung veranlaßt werden, für die Spulen o. dgl. aufweist und Sammelmittel (49) für die vom Materialträger durch die Abziehmittel abgezogenen Spulen o. dgl., wobei die Einrichtung außerdem dadurch gekennzeichnet ist, daß sie Steuermittel für den Takt der Beladung und für das automatische Entladegerät aufweist.

2. Einrichtung nach Anspruch 1, dadurch gekennzeichnet, daß die Spindel (9) der Ladevorrichtung an ihrem unteren Ende mit einem einziehbaren Greiforgan versehen ist, mit dem die Spindel bei einer Abwärtsbewegung eine aufzuspießende Spule (15) ebenso wie die mit ihr verbundene Zwischenlegscheibe (17) in ihren Mitten durchdringt, anschließend die Spule (15) und ihre Zwischenlegscheibe (17) durch eine Aufwärtsbewegung anhebt, um den Stapel der Spulen zu bilden.

3. Einrichtung nach Anspruch 1 oder 2, dadurch gekennzeichnet, daß die Vorrichtung zum Positionieren des oberen Endes des Bajonetts o. dgl. (19) in die exakte Vertikale des unteren Endes der Spindel (9) durch eine Klemme (24) gebildet ist, deren zwei Teile so miteinander wirken, daß sie in geöffneter Stellung längs einer senkrechten Richtung hinsichtlich der Horizontalen oder der Vertikalen an den oberen Teil des Bajonetts o. dgl. (19) heranrücken, wobei das Schließen der Klemme um den oberen Teil durch das Ende der Heranrückbewegung der Klemme bestimmt ist und die exakte Positionierung des oberen Teils unterhalb des unteren Endes der Spindel (9) verursacht.

4. Einrichtung nach einem der Ansprüche 1 bis 3, dadurch gekennzeichnet, daß die Kupplungsmittel des oberen Teils des Bajonetts o. dgl. (19) mit dem unteren Teil der Spindel (9) der Beladevorrichtung durch Teile (25) gebildet werden, die jeweils von einem der Teile getragen werden, die in das Ende des anderen Teils passen, falls die Spindel (9) und das Bajonett (19) o. dgl. sich exakt jedes in der Verlängerung des anderen befindet.

5. Einrichtung nach einem der vorhergehenden Ansprüche, dadurch gekennzeichnet, daß sie einen Zubringförderer (4) für die von der Entnahmevorrichtung (2) kommenden Spulen (15) zur Greifvorrichtung (5) für die Spulen aufweist, deren Greifarm (16), der zu einer Rotationsbewegung in der Lage ist, durch eine fotoelektrische Meßzelle für die am Ende des Förderers (4) angeordnete Spule (15) gesteuert wird, um, falls es notwendig ist, die Ausrichtung der durch den Greifarm (16) gepackten Spule zu berichtigen.

6. Einrichtung nach einem der Ansprüche 1 bis 5, dadurch gekennzeichnet, daß sie ferner eine Preßvorrichtung für die Spulen (15) aufweist, die mit der letzten Spule in Stellung am oberen Ende der Spindel (9) zusammenwirkt, um die Spulen aus der Spindel herauszupressen und sie auf das Bajonett o. dgl. (19) zu stoßen.

7. Einrichtung nach einem der Ansprüche 1 bis 6, dadurch gekennzeichnet, daß sie so angelegt ist, daß sie das Laden der Bajonette oder der Röhren (19) des Materialträgers auch dann erlaubt, wenn sie sich in horizontaler Stellung befinden, und daß in diesem Fall die Spindel (9), auf der die Spulen (15) aufgespießt sind, mit einer Rotationsvorrichtung (41) verbunden ist, die geeignet ist, die Spindel (9) in einer abschnittsweisen Bewegung in der Größenordnung von 90° zu verschwenken, um sie von ihrer ausgänglichen vertikalen Position des Aufspießens der Spulen (15) in eine horizontale Position hinsichtlich eines zu beladenden Bajonetts (oder Rohres) (19) eines Materialträgers, der selbst in horizontaler Stellung ist, zu bringen.

8. Einrichtung nach Anspruch 7, dadurch gekennzeichnet, daß an der Spindel (9) Mittel angebracht sind, die durch ein Stoßorgan (39) gebildet sind, das zu einer linearen Bewegung vorgesehen ist und durch eine geeignete Vorrichtung (38) gesteuert wird, um die Spulen (15), die auf der letzteren aufgespießt sind, auf das zu ladende Bajonett (19) zu überbringen.

9. Einrichtung nach Anspruch 8, dadurch gekennzeichnet, daß die Position des Stoßorganes (39) durch Bewegung einer es tragenden Winde (40) o. dgl. verstellt wird, um die zu entladende Spindel exakt in die Achse des zu ladenden Bajonetts (19) zu bringen.

10. Einrichtung nach einem der Ansprüche 7 bis 9, dadurch gekennzeichnet, daß der Materialträger auf einer drehbaren Platte (22) angeordnet ist, deren Chassis mit einem Montagegestell durch eine zwischenliegende Achse (37) bewegbar ist, um die das Chassis mit der drehbaren Platte (22) und dem Materialträger, den sie trägt, eine abschnittsweise Bewegung im Bereich von 90° durchführen kann, um den Materialträger aus seiner Position mit vertikaler Achse in eine Position mit horizontaler Achse zu bringen.

11. Einrichtung nach einem der Ansprüche 1 bis 10, dadurch gekennzeichnet, daß eine Entladevorrichtung für die Textilien vom Materialträger vorgesehen ist, wobei die Vorrichtung im wesentlichen durch zumindest eine Stange (30) gebildet ist, die mit Greifmitteln (31) für die Enden der Spulen versehen ist und die einerseits mit geeigneten Mitteln (28), um sie in axialer Richtung in eine Hin- und Herbewegung zu versetzen und andererseits mit einem Motor o. dgl. (32) verbunden ist, der diese, falls er in Rotation ist, zeitweise mitnimmt, wobei die Stange (30) so angeordnet ist, daß es ihr möglich ist, mit einem Bajonett (19) des Materialträgers und mit der Spindel (19) des Spulenstapels (15) zusammenzuarbeiten, um die vom Bajonett getragenen Spulen auf die Stange zu überführen, damit das Entladen der Spulen verwirklicht ist.

12. Einrichtung nach Anspruch 11, dadurch gekennzeichnet, daß sie mit einem Sperrorgan (33) versehen ist, das zum einen mit den zuvor genannten Greifmitteln (31) und zum anderen mit der Spindel (9), auf die Spulen (15) von einem Bajonett (19) des Materialträgers durch die Stange (30) überbracht worden sind, zusammenwirkt, wobei die Greifmittel zeitweise in Rotation versetzt werden, um die letzte oder unterste Spule des durch die Spindel (9) getragenen Stapels freizugeben, während das Sperrorgan (33) den Stapel an Spulen zurückhält, der sich oberhalb der untersten Spule befindet.

13. Einrichtung nach Anspruch 12, dadurch gekennzeichnet, daß die zeitweiligen Rotationsbewegungen der Greif- (31) (32) und der Blockiermittel des Sperrorgans (33) ebenso wie die Stopps der Rotation und die sequentielle Freigabe des Sperrorganes (33) synchronisiert über jegliche geeignete Mittel wie elektrische oder pneumatische oder kombinierte elektrische und pneumatische Steuerungen ggf. verbunden mit elektronischen Synchronisationsmitteln wie gedruckte Schaltungen und mit Mitteln der Zeittaktprogrammierung oder durch an sich unter dem Namen programmierbare Automaten bekannte Computer steuerbar sind.

14. Einrichtung nach einem der Ansprüche 11 bis 13, dadurch gekennzeichnet, daß ein Aufnahme- und Transportband (34) vorgesehen ist, das die durch das Zusammenwirken der Rotation der von der Stange (30) getragenen Greifmittel und des durch das Sperrorgan (33) auf die auf der Spindel (9) sitzenden Spulen (15) ausgeführten Sperrvorgangs von der Spindel (9) befreiten Spulen (15) aufnimmt, und das sie in Richtung einer geeigneten Aufbewahrungszone (38) überbringt.

15. Einrichtung nach Anspruch 14, dadurch gekennzeichnet, daß das Aufnahme- und Transportband (34) mit einer Vorrichtung (35) verbunden ist, die dazu geeignet ist, es zeitweise versenkbar zu machen, um einen Beladungsvorgang eines Materialträgers nicht zu behindern.

18. Einrichtung nach Anspruch 1, dadurch gekennzeichnet, daß der automatische Entladeapparat Abziehorgane (43) aufweist, die mit einer Platte (51) o. dgl. zusammenwirken, die auf der oberen Fläche des Sockels (53) des Materialträgers angeordnet ist, wobei diese mit so viel Öffnungen geeigneten Durchmessers durchlöchert ist wie der Materialträger Bajonette oder Rohre (19) trägt und in ihrem mittigen Bereich mit einer Mitnahmevorrichtung (55) versehen ist, mit der die Abziehorgane (43) während einer ersten Phase ihrer Bewegung in Kontakt sind, um die Platte des Materialträgers bei ihrer nachfolgenden Bewegung mitzunehmen, wobei die Platte (51) dann die Spulen o. dgl. (15), die auf den Bajonetten oder Röhren (19) aufgespießt sind, mitnimmt, um die Spulen o. dgl. von den Bajonetten oder Röhren abzuziehen und ihr Auswerfen auf die zuvor genannten Sammelmittel (49) zu bestimmen.

17. Einrichtung nach Anspruch 18, dadurch gekennzeichnet, daß die Sammelmittel (49) in einer Ebene angeordnet sind, die in etwa mit der Ebene fluchtet, in der sich die oberen Enden der Bajonette oder Röhren (19), die durch den Materialträger getragen sind, befinden oder daß diese geringfügig oberhalb dieser Ebene ist.

18. Einrichtung nach einem der Ansprüche 18 und 17, dadurch gekennzeichnet, daß die Abziehorgane für die Spulen (15) o. dgl. Stangen (43) o. dgl. aufweisen, die zu einer Hin- und Herbewegung in der Lage sind, wobei diese an einem ihrer Enden mit Greifzangen (46) für die von der Platte (51) getragene Mitnahmevorrichtung (55) aufweist, wobei die Stangen (43) über ihre Greifzangen (46) die Platte (51) bis über das äußere Ende der Bajonette oder Röhren (19) in die Ebene der Sammelmittel (49) für die Spulen (15) o. dgl., die von der Bewegung der Platte (51) von den Bajonetten oder Röhren gezogen sind, ziehen.

19. Einrichtung nach einem der Ansprüche 16 bis 18, dadurch gekennzeichnet, daß die Abziehorgane ferner zumindest ein auf einem Gestell (42) schwenkbar angeordnetes Organ (47) aufweisen, das die Stangen (43) umgibt und das die Spulen (15) o. dgl., die von den Bajonetten (19) o. dgl. abgenommen sind, auf die Sammelmittel (49) für die Spulen o. dgl. zu stoßen.

20. Einrichtung nach Anspruch 19, dadurch gekennzeichnet, daß das Organ (47) die Form eines umgedrehten Konus aufweist und sich aus einer Vielzahl an längs verlaufenden Segmenten, die schwenkbar auf dem Gestell (42) sind, zusammensetzt und die an ihrem einen Ende eine Stoßmasse (59) zum Stoßen der von den Bajonetten (19) o. dgl. durch die Bewegung der Platte (51) abgenommenen Spulen (15) auf das Sammelmittel (49) aufweisen.

21. Einrichtung nach einem der Ansprüche 16 bis 20, dadurch gekennzeichnet, daß die Sammelmittel durch ein hinsichtlich des Materialträgers umfänglichen Kranz gebildet sind, der etwas oberhalb der Ebene angeordnet ist, in der sich die oberen Enden der Bajonette (19) o. dgl. befinden.

22. Einrichtung nach einem der Ansprüche 18 bis 21, dadurch gekennzeichnet, daß die Sammelmittel durch ein Endlostransportband gebildet sind.

23. Einrichtung nach einem der Ansprüche 16 bis 22, dadurch gekennzeichnet, daß sie ferner eine drehbare Zugvorrichtung (48) für die Stangen (43) aufweist, an deren Enden die Platte (51) angebracht ist, die die von den Bajonetten (19) o. dgl. abgenommenen Spulen (15) trägt, die am Ende der Aufwärtsbewegung der Stangen in Aktion tritt, und zwar wenn die Platte (51) in etwa das Niveau der Sammelmittel (49) erreicht hat und die die Platte (51) mit einer derartigen Geschwindigkeit in Rotation versetzt, die ausreicht, um die von der Platte (51) getragenen Spulen (15) aufgrund der Zentrifugalkraft, die aus dem Rotationsantrieb der Platte (51) resultiert, auszuwerfen.

24. Einrichtung nach einem der Ansprüche 16 bis 23, dadurch gekennzeichnet, daß die Sammelmittel mit Hilfe einer geeigneten Antriebsvorrichtung verschiebbar sind, um die Spulen (15) o. dgl., die auf die Mittel ausgeworfen sind, in Richtung einer Speicherstelle abzuführen.

25. Einrichtung nach einem der Ansprüche 16 bis 24, dadurch gekennzeichnet, daß die in Bewegung befindlichen Sammelmittel mit einer Rutsche (50) o. dgl. zusammenwirken, die die von den Mitteln abgeführten Spulen (15) in Richtung einer Speicherstelle kanalisiert.

26. Einrichtung nach einem der Ansprüche 16 bis 25, dadurch gekennzeichnet, daß die Platte (51) ferner Auslauföffnungen für das Behandlungsbad aufweist, die einen Rücklauf des Restbades, das auf der Platte und in den Spulen verblieben ist, während der Aufwärtsbewegung der Platte (51) zurück in die Behandlungsmaschine ermöglichen.

27. Einrichtung nach einem der Ansprüche 16 bis 26, dadurch gekennzeichnet, daß die von den Organen der Einrichtung ausgeübten linearen und rotierenden Bewegungen durch mechanische und/oder elektrische und/oder pneumatische und/oder hydraulische Steuersysteme gesteuert werden und daß die Abfolge der Bewegungen durch ein Nockensystem oder ein mechanisches elektrisches, pneumatisches oder hydraulisches Wegsteuersystem, das durch ein Zeittaktsystem oder durch fotoelektrische Zellen gesteuert ist oder auch durch ein geeignetes Computerprogramm gesteuert werden.

28. Einrichtung nach Anspruch 16, dadurch gekennzeichnet, daß die Abziehorgane (43) gleichermaßen wie der Materialträger längs einer horizontalen Achse angeordnet sind, dessen Bajonette (19) in horizontalen, parallelen Achsen angeordnet sind, wohingegen die von der oberen Fläche des Sockels (53) des Materialträgers getragene Platte (51) in der Entladeposition im wesentlichen vertikal angeordnet ist, wobei der Materialträger von seiner Position mit vertikaler Achse, in der die Spulen (15), die er trägt, in geeigneten Behandlungsapparaten verschiedenen Behandlungen wie Färben, Bleichen, Schleudern, Trocknen u. dgl. unterworfen werden, in eine Position mit horizontaler Achse gebracht wird, in der die Spulen entladen werden, und zwar durch einen Transportkarren (61), auf dem der Materialträger angeflanscht ist und dessen Bewegung durch zumindest eine geeignete Zugvorrichtung (62) bewirkt wird, die den Karren zunächst über eine horizontale und dann über eine vertikale Ebene in die Position der Achse der Abziehorgane zieht und der durch eine geeignete Bewegungssteuerungsvorrichtung (63) gesteuert ist.

29. Einrichtung nach Anspruch 28, dadurch gekennzeichnet, daß der Transportkarren (61) mit Blockiermittel (65) in der Entladestellung versehen ist, die mit einem auf dem Gestell des Apparates befestigten Blockierorgan (64) in der Achse der Abziehorgane (43) zusammenwirken.

30. Einrichtung nach Anspruch 28, dadurch gekennzeichnet, daß sie mit einem Transportband (66) ausgestattet ist, das die, durch das Zusammenwirken der Abziehvorrichtung (43) und der Platte (51), von den Bajonetten (19) abgezogenen Spulen, die aufgrund der Schwerkraft auf das Band (66) fallen, aufnimmt, wo sie durch ein Führungsblech (68) o. dgl. geführt und durch das Band zu einer geeigneten Speicherstelle (67) geführt werden.

31. Einrichtung nach Anspruch 28, dadurch gekennzeichnet, daß die exakte Positionierung des Transportkarrens in die Achse der Abziehorgane vor einer Blockierung des Karrens in seiner gewünschten Position durch geeignete Wegabschlußvorrichtungen und Positionanzeigevorrichtungen gesteuert werden.

32. Verfahren zum automatischen Laden und Entladen von Textilien, insbesondere als Spulen, auf einen Materialträger, wobei die zu ladenden Spulen o.dgl. von einem Speicherbehälter auf einen Materialträger gezogen werden, die entnommenen Spulen bis an einen Posten zur Einbringung von Zwischengelegen ggf. nach Passieren eines Postens für das Runden der Anschläge und Kalibrierung ihrer Durchmesser gebracht werden, wobei auf einem Träger Stapel an Spindeln gebildet werden, einer nach dem anderen der gebildeten Stapel auf ein Bajonett, Rohr, Ring o. dgl. eines Materialträgers gebracht werden und die auf die Bajonette o. dgl. überbrachten Stapel mit zumindest einer Verriegelungskappe o. dgl. verriegelt werden, dadurch gekennzeichnet, daß jeder Stapel durch Auffädeln einer der Spulen unter der anderen auf eine Spindel bei Hin-und Herbewegungen der Spindel gebildet wird, und daß das rasche und automatische Entladen der Spulen o. dgl., die durch den Materialträger, der von einer Behandlungsmaschine der Textilmaterialien o. dgl. gezogen wird, getragen sind, durch Abräumen des Zusammenbaus an Spulen eines Spulenstapels, der auf einem Bajonett o. dgl. des Materialträgers aufgespießt ist, bewirkt wird.

33. Verfahren nach Anspruch 32, dadurch gekennzeichnet, daß alle Spulen gleichzeitig durch eine Translationsbewegung abgetragen werden, die auf eine unter den Spulen liegende Fläche, die die auf die Bajonette aufgespießten Spulen bis an deren freien Enden schiebt, ausgeübt wird.

34. Verfahren nach Anspruch 33, dadurch gekennzeichnet, daß die Bewegung der Fläche eine vertikale Aufwärtsbewegung ist, und daß die ebene Fläche am Ende ihrer Aufwärtsbewegung mit einer Geschwindigkeit in Rotation versetzt wird, die geeignet ist, eine Zentrifugalkraft zu schaffen, die die Spulen von der rotierenden ebenen Fläche abwirft, und zwar in Richtung von Sammelmitteln, die zu einer geeigneten Bewegung veranlaßt werden, um die ausgeworfenen Spulen in Richtung einer Speicherzone zu bringen.

**Claims**

1. Installation for automatically landing textile materials onto halders intended to be introduced into textile material processing machines comprising at least one bulk storage chamber (1) for textile materials to be loaded, notably in the form of bobbins (15), at least one device (2) for extracting the bobbins or the like from the chamber, means for transferring the bobbins, a bobbin gripping device (5) far bringing them into position far the following device, possibly a calibrating and bobbin or similar edge rounding device (6), a device (7) for the putting into place of insertion discs (17) comprising a magnzine (8) for these discs, prepared bobbin gripping means on this device (7) for arranging them in piles, means far displacing said piles and bringing them into position in the upper extremity prolongntion of a bayonet or of a tube (19) of the bolder, means (25) for the coupling of the lower part of a pile support (9) with the upper part of the bayonet or tube (19), a magazine for cover cape for the piles of bobbins or the like transferred onto the bayonets (19) associated with a means for gripping said cover cape and for transferring the same successively on each of the bayonete or the like loaded with bobbins (15) for blocking the pile transferred onto said bayonet or the like, said installation being characterized by the fact that the bobbins (15) are put into place on the support or spindle (9) by piling one upon another, the transfer of the spindle (9) to the bayonet or tube (19) taking place after the precise vertically positioning of the upper extremity of the bayonet or tube with respect to the lower extremity of the spindle (9) with the aid of a device (24) and in the fact that is compriees an automatic unloading device of the textile material from the material holder after treatment, said unloading device (42, 43,...) comprising bobbin or similar extraction means (43) animated by a reciprocating translational movement and means (44) for recuperating the bobbins or similar from the carrier by said extraction means, said installation being also characterized in that it comprises control means for the rate of loading and the automatic unloading device.

2. Installation in accordance with claim 1, wherein the spindle (9) of the loading apparatus is provided at its lower extremity with an upwardly movable gripping means, said spindle (9) and means traversing in one downward movement the centres of a bobbin (15) to be loaded and its associated insertion disc (17), then lifting in one upward movement, said bobbin (15) and corresponding insertion disc (17) in order to form a bobbin pile.

3. Installation in accordance with claim 1 or 2, where in the devise for positioning the upper extremity of the bayonet or the like (19) in precise vertical relationship with respect to the lower extremity of the spindle (9) comprises a clamping jaw (24) the two parts of whish co-operating one with the other when brought together in the open position along a direction forming an angle with the horizontal or vertisal, onto the upper part of the bayonet or the like (19), the closing of the jaw about said upper part being determined by the end of the source of approach of the jaw and positioning exactly said upper part under the lower extremity of the spindle (9).

4. Installation in accordance with any one of claims 1 to 3, wherein the soupling means of said upper part of the bayonet or the like (19) with the lower part of the spindle (9) of the loading device is formed by parts (25) carried respectively by one of said pieces, embedding themselves into the extremity of the other part when the spindle (9) and the bayonet or the like (19) are directly above one another.

5. Installation in accordance with any one of the previous claims, characterized in that it comprises a conveyor (4) bringing the bobbins (15) issuing from the extracting device (2) to the bobbin gripping device (5), the gripping arms of which (16) is animated by a rotational movement controlled by a photo electric cell detecting the sense of the bobbin (15) placed at the extremity of the conveyor (4), in order to restify, in case of need, the sense of the bobbin (15) seized by said gripping arm (16).

6. Installation in accordance with any one of claims 1 to 5, characterized in that it further comprises a bobbin (15) pressing device co-operating with the last bobbin in the upper extreme position of the spindle (9), in order to press the bobbins out of the spindle and push them onto the bayonet or the like (19).

7. Installation in accordance with any one of the claims 1 to 6, characterized in that it is conseived to allow the loading of the bayonets or tubes (19) of the holder when the latter are in a horizontal position and wherein, and in that to this end, the spindle (9) on whish the bobbins (15) have been piled up is associated with a rotating device (4) for turning the spindle (9) along a sector of about 90°, in order to transfer the same from the initial vertical position of piling up of the bobbins (15) to a horizontal position facing a bayonet or tube to be loaded, of a holder, itself in the horizontal position.

8. Installation in accordance with claim 7, wherein pushing means (39) with a linear motion and controlled by appropriate means (38) are associated with the spindle (9) in order to transfer the bobbins (15) piled on the latter onto the bayonet to be loaded (19).

9. Installation in accordance with claim 8, wherein the pushing means (39) is adjusted by means of a jack or the like (30) which carries it to place the spindle (9) to be unloaded exactly in the axis of the bayonet to be loaded (19).

10. Installation in accordance with any one of the claims 7 to 9, wherein the material holder is plased on a rotating platform (22) the chassis of which is articulated on a frame of the installation by means of an axle (37), said chassis being suited to effect, with the rotating platform (22) and the material holder it carries, a sectorial movement of the order of 90°, in order to transfer the material holder from its position with vertical axis to its position with horizontal axis.

11. Installation in accordance with any one of the claims 1 to 10, characterized in that it is provided with a device for unloading the textile material from the material holders, said devise being essentially formed by at least one rod (30) provided with bobbin gripping means (31) at one of its extremities, and associated on the one hand with means (28) for axially displacing it with a reciprocating movement, and on the other hand, with a motor or the like (32) to temporarily rotate the rod, said rod (30) being arranged so as to permit its co-operation with a bayonet (19) of the holder and with the spindle (9) for piling up the bobbins (15), in order to transfer the bobbins carried by paid bayonet onto said spindle, to effectuate the unloading of paid bobbins.

12. Installation in accordance with claim 11, characterized in that it is provided with a blocking means (33) co-operating on the one hand with the above mentioned gripping means (31) and with the spindle (9) on the other hand, on which the bobbins (15) have been transferred from a material holder bayonet (19) by said rod (30), the gripping means being provisionally rotated to liberate the last bobbin, or lowest bobbin of the pile carried by the spindle (9), while the blocking means (33) retains the pile of bobbins above the lowest bobbin.

13. Installation in accordance with claim 12, wherein the provisional rotational movements of the above mentioned gripping means (31) and blocking movement of said blocking means (33), as well as the halts in said rotation and the sequential liberation of the blocking means (33) are controlled by appropriate synchronization means such as electric or pneumatic control or combined electrical and pneumatical control, possibly associated with electronic synchronization means such as printed circuits and clock or computer programming means known per se under the name of programmable robots.

14. Installation in accordance with any one of the claims 11 to 13, characterized in that it is provided with a receiving and transferring conveyor belt (34), receiving the bobbins (15) freed from the spindle (9) by the co-operation of the rotation of the gripping means (31) carried by the above mentioned rod (30) and the blocking action exerted by the above mentioned blocking means (33) on the bobbins (15) remaining on the spindle (9), and transferring them to an appropriate stocking area (36).

15. Installation in accordance with claim 14, wherein said receiving and transferring belt conveyor (34) is associated with a device (35) for provisionally retracting said belt in order not to interfere with the loading of a material holder.

16. Installation in accordance with claim 1, wherein the automatic unloading apparatus comprises extracting means (43) co-operating with a plate (51) or similar placed on the upper face of the base (53) of the material holder, being pierced with the same number of holes, of appropriate diameter, as there are bayonets or tubes (19) on the material holder, and provided in its central zone with a catching device (55) with which come into contact paid extraction means (43) during a first phase of their movement in order to move said plate away from the material holder during their subsequent movement, said plate (51) then carrying with it the bobbins (15) or similar piled on the bayonets or tubes in order to clear said bobbins or similar off the bayonets or tubes and to give rise to their withdrawal on said recuperating means.

17. Installation in accordance with claim 16, wherein the recuperating means (49) are arranged in a plane coinciding roughly with or else slightly above the plane of the upper extremities of the bayonets or tubes (19) carried by the material holder.

18. Installation in accordance with any one of the claims 16 and 17, wherein the bobbin (15) or similar extraction means compripe rods (43) or the like animated with a reciprocating movement fitted at one of the extremities with clamping jaws (46) for the catching device (55) carried by said plate (51), said rods (43) driving, by means of their clamping jaws (46), said plate (51) beyond the extremity of the bayonets or tubes, in the plane of the recuperating means (49) for the bobbins (15) freed from the bayonets or tubes by the movenent of said plate (51).

19. Installation in accordance with any one of the claims 16 to 18, wherein said extraction means further comprise at least one device (47) articulated on a frame (42) surrounding the rods (43) pushing the bobbins (15) or similar freed from the bayonets (19) or similar, onto the bobbin or the like recuperating means (49).

20. Installation in accordance with claim 19, wherein said device (47) has the form of an inverted cone and comprises a plurality of longitudinal segments articulated on the frame (42) and comprising, at one of their extremities, a mass (59) for pushing the bobbins (15) freed from the bayonets (19), by the movement of said plate (51), onto the recuperating means (49).

21. Installation in accordance with any one of claims 16 to 20, wherein the recuperating means are formed by a peripheral collar (49) with respect to the material holder, located a little above the plane where are located the upper extremities of the bayonets (19).

22. Installation in accordance with any one of claims 16 to 21, wherein the recuperating means are formed by an endless belt conveyor.

23. Installation in accordance with any one of claims 16 to 22, characterized in that it comprises a device (48) for rotating the rods (43) at the end of which is attached said plate (51) carrying the bayonet freed bobbins (15), the movement being started at the end of the upward movement of said rods, when the plate (51) is approximately at the level of the recuperating means (49) and rotates the plate (51) at a speed sufficient to eject by means of the centrifugal effect resulting from the motion of said plate (51), the bobbins (15) carried by said plate to the recuperating means (49).

24. Installation in accordance with any one of claims 16 to 23, wherein the recuperating means are displaced by an actuating mechanism suitable for clearing the bobbins (15) or the like ejected on said means, to a stocking area.

25. Installation in accordance with any one of claims 16 to 24, wherein the moving recuperating means co-operate with a conveyor chute (50) or the like canalizing the bobbins (15) evacuated by said means to a stocking area.

26. Installation in accordance with any one of claims 16 to 25, wherein the plate (51) comprises outlet holes for the treatment bath liquid permitting the return of the residual bath liquid subsisting on the plate and the bobbins, in the treating machine, during the upward movement of the plate (51).

27. Installation in accordance with any one of claims 16 to 26, where in the linear and rotational movements of the various parts of the installation are controlled by mechanical and/or electric and/or pneumatic and/or hydraulic systems and wherein the sequence of said movements is controlled by a cam system or a mechanical, electric, pneumatic or hydraulic course change-over system controlled by a clock system or by photo-electric cells, or else by an appropriate computer programme.

28. Installation is accordancs with claim 16, wherein the extraction means (43) are arranged along a horizontal axis, as does the material holder, the bayonets (19) of which are placed along parallel horizontal axes, whereas the plate (51) carried by the upper face of the base (53) of the material holder is arranged, in the unloading position, approximately vertically, the material holder being led from the position with vertical axis wherein the bobbins it carries are submitted, in the appropriate treatment devices, to different treatments such as dying, bleaching, spinning, drying, etc..., to a position with horizontal axis wherein the bobbins are unloaded, by a transporting trolley (61), the material holder being clamped to the latter, the trolley being moved at least by one appropriate pulling device (62) driving said trolley in a horizontal plane then in a vertical plane, in a position in the axis of said extraction means, and which is control led by an appropriate movement controll device (63).

29. Installation in accordance with claim 28, wherein the transporting trolley (61) is provided with blocking means (65) in the unloading position co-operating with a blocking device (64) mounted on the housing of the apparatus in the axis of the extraction means (43).

30. Installation in accordance with claim 28, characterized in that it is equipped with a conveyor belt (66) receiving the bobbins extracted from the bayonets (19) by the co-operation of the extracting device (43) and the plate (51), falling under their own weight onto said belt (66) and being guided by a guiding plate (68) or similar they being then brought by said belt to an appropriate stocking area (67).

31. Installation in accordance with claim 28, wherein the exact putting into position of the transporting trolley in the axis of the extraction means is control led by appropriate end of course devices, and position detection devices, prior to the blocking of said trolley in the desired position.

32. Automatic loading and unloading process for textile materials, notably on bobbins, onto a material holder comprising the steps of taking out from a stocking container the bobbins or the like to be loaded on a holder, transferring the extracted bobbins to an insertion disc post after a possible passage to an edge rounding and diameter calibrating post, forming bobbin piles on a support, transferring one by one the formed piles onto a bayonet, tube, hoop or similar of a material carrier, and threading the transferred pile onto the bayonet or similar by means of a pressure cap or the like, wherein each pile is formed on a spindle by piling up the bobbins one on top of another during reciprocating movements of the spindle and wherein the rapid and automatic unloading of the bobbins or similar carried by the material holder from a textile material treating machine or the like is carried out by disengaging whole the bobbins from a pile of bobbins threaded on a bayonet or the like of the material holder.

33. Process in accordance with claim 32, wherein all of the bobbins are disengaged at the same time by a translational movement communicated to a surface under the bobbins, pushing the piled up bobbins on the bayonets up to the free extremity of the latter.

34. Process in accordance with claim 33, wherein the movement of said surface is an upward vertical movement and wherein said plane surface is rotated at the end of its upward course at such a speed as to create a centrifugal force ejecting the bobbins from said rotating plane, forwards recuperatig means animated by a movement apt to direct the bobbins towards a stocking area.

FIG. 1

FIG. 2

15

9

25

19

19

20

23

22

FIG. 3

12

11

10

24

13

9

FIG. 4

9

19

14

23

22

24

24

19

24

24

FIG. 5

FIG. 6

0 130 092

FIG.7

27

27

27

FIG _ 8 _

FIG. 9

0130092

_FIG _ 10 _

FIG. 11.

FIG.12

29

28

32

9

30

19

15

31

?2

23

FIG .13.

FIG.14 -

27

FIG. 15

FIG. 16

FIG.17

FIG. 18

FIG 19

FIG. 20

39

0 130 092

_FIG. 21_

41

0 130 092

FIG. 22.

0 130 092